(19) Europäisches Patentamt
European Patent Office
Office européen des brevets

(11) **EP 3 928 253 B1**

(12) **EUROPÄISCHE PATENTSCHRIFT**

(45) Veröffentlichungstag und Bekanntmachung des Hinweises auf die Patenterteilung:
**16.04.2025   Patentblatt 2025/16**

(21) Anmeldenummer: **20701412.7**

(22) Anmeldetag: **15.01.2020**

(51) Internationale Patentklassifikation (IPC):
**G06V 10/141** *(2022.01)*     **G06V 20/56** *(2022.01)*

(52) Gemeinsame Patentklassifikation (CPC):
**G06V 20/56; G06V 10/141**

(86) Internationale Anmeldenummer:
**PCT/EP2020/050941**

(87) Internationale Veröffentlichungsnummer:
**WO 2020/169276 (27.08.2020 Gazette 2020/35)**

(54) **SENSORANORDNUNG UND VERFAHREN FÜR EIN FAHRZEUG ZUM ERFASSEN VON ENTFERNUNGSINFORMATIONEN**

SENSOR ASSEMBLY AND METHOD FOR A VEHICLE FOR CAPTURING DISTANCE INFORMATION

SYSTÈME DE CAPTEURS ET PROCÉDÉ POUR UN VÉHICULE DESTINÉ À DÉTECTER DES INFORMATIONS DE DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2019   DE 102019202327**

(43) Veröffentlichungstag der Anmeldung:
**29.12.2021   Patentblatt 2021/52**

(73) Patentinhaber: **VOLKSWAGEN AKTIENGESELLSCHAFT
38440 Wolfsburg (DE)**

(72) Erfinder:
• **RUCHATZ, Thomas
  38542 Leiferde (DE)**
• **WOHLENBERG, Stefan
  38114 Braunschweig (DE)**

(56) Entgegenhaltungen:
DE-A1- 102013 002 671

• **LARRY LI: "Time-of-Flight Camera - An Introduction", 31 May 2014 (2014-05-31), XP055300210, Retrieved from the Internet <URL:http://www.ti.com/lit/wp/sloa190b/sloa190b.pdf> [retrieved on 20160906]**
• **ROLF KAUFMANN ET AL: "A time-of-flight line sensor: development and application", PROCEEDINGS OF SPIE, vol. 5459, 1 September 2004 (2004-09-01), XP055162535, ISSN: 0277-786X, DOI: 10.1117/12.545571**

EP 3 928 253 B1

**Beschreibung**

Die Erfindung betrifft eine Sensoranordnung und ein Verfahren für ein Fahrzeug, insbesondere für ein Kraftfahrzeug wie beispielsweise einen Personenkraftwagen oder einen Lastkraftwagen, zum Erfassen von Entfernungsinformationen. Das Erfassungsprinzip kann allgemein auf dem Erfassen von Licht (d. h. elektromagnetischer Strahlung) im sichtbaren oder nicht sichtbaren Bereich beruhen.

Im Kontext von Fahrzeugen ist es bekannt, Szenen innerhalb eines oder in der Umgebung des Fahrzeugs mittels optischer Sensoren zu erfassen. Insbesondere ist es bekannt, Licht mit vorbestimmten Eigenschaften in die Szene einzustrahlen und von der Szene reflektiertes Licht mittels eines lichtempfindlichen Sensors zu empfangen. Nach Maßgabe des empfangenen Lichts können Messsignale erzeugt und diese können zur Gewinnung von Entfernungsinformationen oder, mit anderen Worten, Abstandsinformationen ausgewertet werden.

Diese Informationen können dann von verschiedenen Fahrerassistenzsystemen verwendet werden, wie dies in [0002] der vorveröffentlichten DE 10 2013 002 671 A1 der Anmelderin beschrieben wird. In der DE 10 2013 002 671 A1 ist zum Beispiel unter Verweis auf die WO 2008/1547361 A1 ferner offenbart, dass als Lichtquelle für das Erzeugen und Einstrahlen von Licht, dass sensorisch dann in reflektierter Form erfasst werden kann, ohnehin vorhandene Beleuchtungssysteme eines Fahrzeugs verwendet werden können und insbesondere LEDbasierte Beleuchtungssysteme (siehe zum Beispiel [0003] der DE 10 2013 002 671 A1). Das Beleuchtungssystem kann - auch im Rahmen der vorliegenden Anmeldung - beispielsweise ein Tagfahrlicht, ein Fernlicht, ein Abblendlicht, eine Blinkerleuchte, eine Nebelleuchte oder dergleichen umfassen.

Ferner wurde laut [0007] und der weiteren detaillierten Beschreibung der DE 10 2013 002 671 A1 erkannt, dass zum Verkürzen der Auswertungszeit und Reduzieren von Anforderungen an die Sensoren streifenförmige Bereiche gebildet werden können, für die jeweils Entfernungshistogramme ermittelt werden. Auf deren Basis können dann für Kreuzungspunkte der streifenförmigen Bereiche jeweils Entfernungsinformationen ermittelt werden.

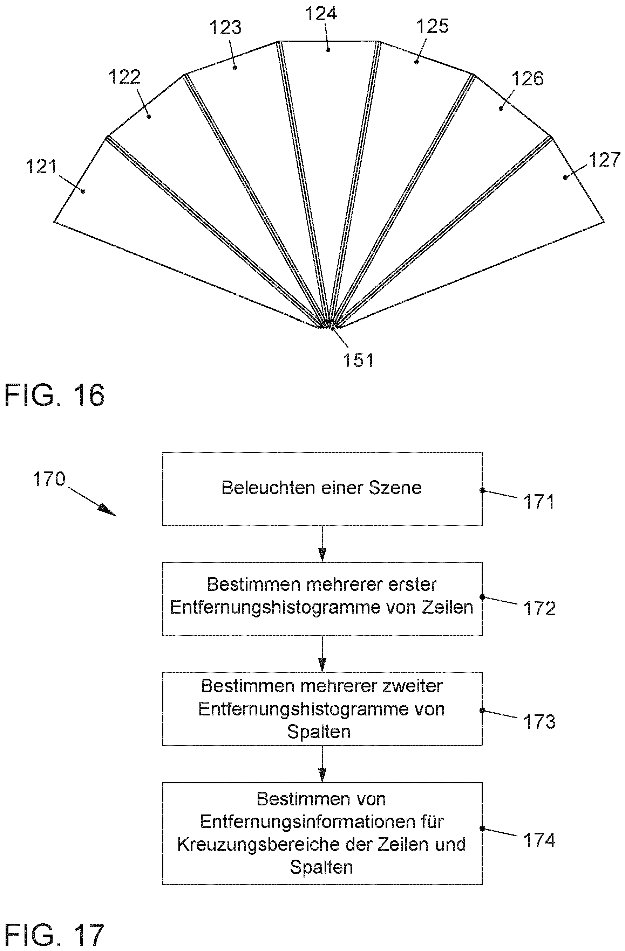

Die vorliegende Anmeldung baut auf den Erkenntnissen der DE 10 2013 002 671 A1 auf, insbesondere deren allgemeiner Beschreibungsteil, die in den Ansprüchen beschriebenen Gegenstände und vor allem die Schilderung der Figuren 17 bis 22.

Aus Larry Li, Time-of-Flight Camera - An Introduction, 31.05.2014, URL: http://www.ti.com/lit/wp/sloa190b/sloa 190b. pdf, ist eine Einführung zu Time-of-Flight-Kameras bekannt. Aus Rolf Kaufmann et al., A time-of-flight line sensor: development and application, PROCEEDINGS OF SPIE, 01.09.2004, Vol. 5459, doi:10.1117/12.545571, ISSN 0277-786X, ist ein Time-of-Flight-Sensor bekannt.

Es wurde erkannt, dass mit der Lehre der DE 10 2013 002 671 A1 trotz alledem keine optimale Entfernungserfassung erzielbar ist.

Aufgabe der vorliegenden Erfindung ist es daher, die streifenförmiger Lichterfassung der DE 10 2013 002 671 A1 weiter zu verbessern.

Diese Aufgabe wird durch eine Sensoranordnung gemäß Anspruch 1 und ein Verfahren gemäß Anspruch 7 gelöst. Vorteilhafte Weiterbildungen sind in den abhängigen Ansprüchen angegeben. Es versteht sich, dass die vorstehenden Bemerkungen auch auf die vorliegende Erfindung zutreffen können, sofern nicht anders angegeben oder ersichtlich.

In Abweichung zu der Lösung von der DE 10 2013 002 671 A1, die eine sequenzielle Messwerterfassung für die einzelnen streifenförmigen Bereiche vorsieht, wie es sich aus den Messzeitangaben zum Ende von [0067] ergibt, sieht die Erfindung vor, Messwerte der streifenförmigen Bereiche zumindest teilweise simultan bzw. parallel zu erfassen. Beispielsweise können sämtliche streifenförmigen Bereiche, wenigstens aber 10 % der insgesamt vorgesehenen streifenförmigen Bereiche, parallel erfasst oder mit anderen Worten ausgelesen werden.

Unter einem Messwert kann dabei ein zu einem vorbestimmten Zeitpunkt generierter Messwert und insbesondere Messsignalwert verstanden werden, der für den entsprechenden streifenförmigen Bereich gewonnen wird. Es kann sich bei dem Messwert bzw. dem Messsignalwert auch jeweils um eine Werteverteilung bezogen auf einen spezifischen Zeitpunkt handeln Der Messwert ist vorzugsweise eines der vorstehend geschilderten Entfernungshistogramme bzw. kann zur Bildung eines solchen verwendet werden.

Ein Vorteil der offenbarten Lösung ist, dass die beobachtete Szene zumindest teilweise und vorzugsweise vollständig gleichzeitig erfasst werden kann. Das simultan erfasste Licht bzw. die darauf basierend simultan erzeugten Messwerte bilden die Szene somit zu einem gleichen Zeitpunkt ab. Dies reduziert Bewegungsunschärfen, die bei einer sequenziellen Erfassung und gleichzeitiger Relativbewegung zwischen Sensor und Szene auftreten können. Anders ausgedrückt können bei der hierin vorgeschlagenen Lösungen Bewegungsunschärfen allenfalls während der vergleichsweise kurzen parallelen Belichtungszeit bzw. Auslesezeit auftreten, wohingegen bei den bekannten Lösungen Bewegungsunschärfen während den kumulierten Belichtungszeiten für sämtliche der sequenziell ausgewerteten streifenförmigen Bereiche auftreten können.

Ein weiterer Vorteil ergibt sich dadurch, dass aufgrund der zumindest teilweisen parallelen Messwerterfassung über eine Mehrzahl der streifenförmigen Bereiche das eingestreute Licht besser ausgenutzt wird. Im Vergleich zur bisherigen Lösung reichen nun vergleichsweise kurze eingestreute Lichtpulse oder Pulszüge aus, zwischen denen auch vergleichsweise lange Pausen möglich sind. Dies ermöglicht Einsparpotentiale auf der Hardwareseite und insbesondere im Zusammenhang mit verwendeten Beleuchtungsquellen.

Zu beachten ist, dass zur praktischen Umsetzung der Lehre der DE 10 2013 002 671 A1 unter Umständen auch mehrere Erfassungs- samt dazugehöriger Beleuchtungszyklen vorgesehen werden müssen, zum Beispiel einer für erste streifenförmige Bereiche (zum Beispiel in Zeilenrichtung) und weiterer für zweite streifenförmige Bereiche (zum Beispiel in Spaltenrichtung). Bei der vorliegenden Lösung kann hingegen ein Erfassungs- und Beleuchtungszyklus reichen, da das Licht von mehreren streifenförmigen Bereichen parallel erfasst wird.

Im Detail wird eine (optische) Sensoranordnung für ein Fahrzeug zum Erfassen von Entfernungsinformationen vorgeschlagen, mit den Merkmalen von Anspruch 1 und u.a. mit:

- einem (optischen) Sensor, der dazu eingerichtet sind, (sichtbares oder nicht sichtbares) Licht zu empfangen, das von einer Szene in der Umgebung (der Sensoranordnung) reflektiert wird;
- einer (zum Beispiel elektronischen) Verarbeitungseinheit, die dazu eingerichtet ist, mehrere erste Entfernungshistogramme in Abhängigkeit von dem empfangenen Licht zu bestimmen, wobei einem jeweiligen ersten Entfernungshistogramm der mehreren ersten Entfernungshistogramme ein jeweiliger erster streifenförmiger Bereich der Szene zugeordnet ist, wobei das erste Entfernungshistogramm eine Stärke von Reflexionen in einem Entfernungsbereich durch Objekte in dem zugeordneten ersten streifenförmigen Bereich umfasst;

und die ferner dazu eingerichtet ist, mehrere zweite Entfernungshistogramme in Abhängigkeit von dem empfangenen Licht zu bestimmen, wobei einem jeweiligen zweiten Entfernungshistogramm der mehreren zweiten Entfernungshistogramme ein jeweiliger zweiter streifenförmiger Bereich der Szene zugeordnet ist, wobei das zweite Entfernungshistogramm eine Stärke von Reflexionen in einem Entfernungsbereich durch Objekte in dem zugeordneten zweiten streifenförmigen Bereich umfasst;

und die ferner dazu eingerichtet ist, eine Entfernungsinformation für einen Bereich der Szene in Abhängigkeit von den mehreren ersten Entfernungshistogrammen und den mehreren zweiten Entfernungshistogrammen zu bestimmen, wobei der Bereich der Szene einen Kreuzungsbereich eines der ersten streifenförmigen Bereiche mit einem der zweiten streifenförmigen Bereiche umfasst;

wobei die streifenförmigen Bereiche der Szene jeweils mit streifenförmigen Bereichen des Sensors korrespondieren, und wobei die Sensoranordnung (und insbesondere deren Verarbeitungseinheit) dazu eingerichtet ist, für eine Mehrzahl der korrespondierenden streifenförmigen Bereichen das darin empfangene Licht zeitgleich zu bestimmen (oder mit anderen Worten auszulesen und/oder Messwerte für die korrespondierenden streifenförmigen Bereiche zeitgleich zu bestimmen).

Es kann also vorgesehen sein, dass zwischen den Bereichen einer Szene, den streifenförmigen Bereichen mit denen die Szene erfasst wird und den streifenförmigen Bereichen eines bzw. auf einem Sensor eine Zuordnung bzw. Korrespondenz besteht. Insbesondere kann vorgesehen sein, dass eine Szene mittels (zum Beispiel virtuellen) streifenförmigen Bereichen der oben genannten Art erfasst wird und diese streifenförmigen Bereiche durch entsprechende (korrespondierende) Bereiche des Sensors und insbesondere die darin vorhandenen nachstehend erläuterten Sensorelemente gebildet bzw. bereitgestellt werden. Die ersten und zweiten streifenförmigen Bereiche können also sozusagen virtuell sein, aber auf eine entsprechende Gruppierung bzw. Anordnung von Sensorelementen innerhalb des Sensors zurückzuführen sein, die die Szene in entsprechend erfassbare streifenförmige Bereiche unterteilen. Insbesondere können die streifenförmigen Bereiche zu Zeilen und Spalten eines matrixförmig unterteilten Sensors korrespondieren (d. h. die korrespondierenden streifenförmigen Bereiche des Sensors können dessen Zeilen und Spalten sein).

Allgemein kann der Sensor ermöglichen, dass eine Szene mittels eines zweidimensionalen Erfassungsbereichs abbildbar ist, der in entsprechend streifenförmige Bereiche unterteilt ist bzw. der den oben genannten streifenförmigen Bereichen zuordenbar ist, mit denen die Szene erfasst werden soll.

Der Sensor kann mehrere Sensorelemente mit jeweils wenigstens einem Fotodetektor (oder auch Fotodetektorelement) umfassen. Bei den Sensorelementen kann es sich um SiPMs (silicone Photomultiplier) handeln, die vorzugsweise aus mehreren kleineren Fotodetektoren aufgebaut sein können (zum Beispiel aus sogenannten SPADs - single Photon avalanche diodes). Alternativ können die Sensorelemente durch sogenannte PIN Dioden gebildet werden.

Die Fotodetektoren sind erfindungsgemäß matrix- bzw. rasterförmig angeordnet und demnach, wie auch allgemein der Sensor bzw. ein hiervon definierter Erfassungsbereich, weisen sie eine Zeilen- und eine Spaltenrichtung auf, die senkrecht aufeinander stehen.

Das Bestimmen von empfangenem Licht für die korrespondierenden streifenförmigen Bereiche kann auch als Auslesen oder Auswerten dieser Bereiche bezeichnet werden, wobei Letzteres vorzugsweise auch das Bilden der entsprechenden Entfernungshistogramme umfasst (oder mit anderen Worten die bereichsweise Messwerterzeugung).

Sämtliche Messwerte oder Messsignale können allgemein zeitaufgelöst bestimmt werden. Die Sensoranordnung kann auch eine Speichereinrichtung umfassen, in der die (vorzugsweise zeitaufgelösten) Messsignale gespeichert werden können. Die zeitaufgelösten Signale, die vorzugsweise je Pixel und/oder Sensorelement erhalten werden, kann ein zeilen- und spaltenweises ebenfalls zeitaufgelöstes Summensignal vorzugsweise zeitgleich erhalten werden. Dieses kann dann mit hierin beschriebenen Verfahren in ein distanzaufgelöstes Signal bzw. in ein Entfernungshistogramm gewandelt werden.

Die Parallelität bzw. die Zeitgleichheit des Auslesens kann dadurch erreicht werden, dass jedem streifenförmigen Bereich eine eigene (elektrische) Leitung zugeordnet ist, in den sämtliche Sensorelemente innerhalb dieses streifenförmigen Bereichs (bzw. innerhalb eines korrespondierenden streifenförmigen Bereiches des Sensors) ihre Signale einspeisen. Hierbei kann es sich um die nachstehend erläuterten Zeilen- und Spaltenleitungen handeln.

Es kann vorgesehen sein, sämtliche korrespondierenden streifenförmigen Bereiche (des Sensors) gleichzeitig auslesbar sind, zumindest aber sämtliche streifenförmigen Bereiche (des Sensors), die zu den ersten oder zweiten streifenförmigen Bereichen korrespondieren.

Gemäß einer Weiterbildung kann vorgesehen sein, das für wenigstens 50 % (und vorzugsweise wenigstens 25 % oder wenigstens 10 %) der korrespondierenden streifenförmigen Bereiche das darin empfangene Licht zeitgleich zu bestimmen.

Allgemein kann ferner vorgesehen sein, dass die korrespondierenden streifenförmigen Bereiche des Sensors (bspw. virtuell) in Bereichen unterteilt sind, in denen das darin empfangene Licht zeitgleich bestimmt wird, und in Bereiche, in denen das darin empfangene Licht nicht zeitgleich bestimmt wird. In den letztgenannten Bereichen kann stattdessen eine sequenzielle Auswertung bzw. Auslesung vorgesehen sein.

In diesem Zusammenhang kann ferner vorgesehen sein, dass die Bereiche ohne zeitgleiche Bestimmung des empfangenen Lichts zumindest teilweise in (wenigstens) einem Randbereich des Sensors liegen. Als Randbereich des Sensors kann zum Beispiel ein Zeilen- und/oder Spaltenbereich (oder allgemein ein Bereich) verstanden werden, der bis zu 10 % oder bis zu 5 % der Gesamtzahl und/oder der Gesamtfläche der Zeilen und/oder Spalten (oder allgemein der Gesamtzahl und/oder der Gesamtfläche der korrespondierenden streifenförmigen Bereiche) des Sensors umfasst und der vorzugsweise abseits eines geometrischen Zentrums des Sensors liegt und insbesondere zusätzlich eine den äußersten Rand bildende Zeile und/oder Spalte umfasst (oder allgemein einen den äußersten Rand bildenden streifenförmigen Bereich).

Ein Vorteil dieser Variante ist, dass die zeitgleiche und präzisere Erfassung einem zentralen Bereich der Sensors vorbehalten sein kann und in den Randbereiche, in denen vrs. weniger für das Fahrzeug relevante Ereignisse zu beobachten sein werden, eine weniger genaue sequentielle Erfassung stattfinden kann.

Wie bereits angedeutet, umfasst der Sensor eine Sensormatrix mit in Zeilen und Spalten angeordneten Sensorelementen, die jeweils für ein Empfangen von Licht eingerichtet sind, wobei die Zeilen mit den ersten streifenförmigen Bereichen der Szene korrespondieren und die Spalten mit den zweiten streifenförmigen Bereichen der Szene korrespondieren.

Allgemein kann der Sensor und können insbesondere die Sensorelemente jeweils eine (Licht-) Intensität des empfangenen Lichts erfassen. Die Sensorelemente können Pixelwerte liefern und und/oder einzelne Pixel bzw. Bildpunkte der Sensormatrix definieren. Zeitgleich aufgenommene Pixelwerte aber auch sequenziell aufgenommene Pixelwerte, die sich auf denselben Erfassungsvorgang beziehen, können gemeinsam betrachtet werden und zum Beispiel zum Herleiten gemeinsamer Entfernungshistogramme verwendet werden..

Die Sensorelemente in den Zeilen und Spalten sind vorzugsweise jeweils zusammengeschaltet (zum Beispiel durch Anschließen an gemeinsame elektrische (Signal-) Leitungen und insbesondere an gemeinsame Zeilen- bzw. Spaltenleitungen) und die Entfernungshistogramme werden bevorzugt aus einem Gesamtsignal von entsprechend zusammengeschalteten Sensorelementen bestimmt. Durch das Zusammenschalten können die korrespondierenden ersten und zweiten streifenförmigen Bereiche der Sensors gebildet werden.

Gemäß einer erfindungsgemäßen Alternative umfassen zumindest diejenigen Sensorelemente, deren empfangenes Licht zeitgleich bestimmt wird, jeweils eine Stromspiegelanordnung, die mit einer Zeilenleitung und mit einer Spaltenleitung verbunden ist, an denen auch weitere Stromspiegelanordnungen anderer Sensorelemente angeschlossen sind. Dies ermöglicht es, die je Sensorelement gewonnenen Messsignale zeilen- bzw. spaltenweise zusammenzufassen und hieraus dann auch die entsprechenden Entfernungshistogramme zu bilden. Ferner bietet sich diese Variante insbesondere dann an, wenn die Sensorelemente SiPMs sind. Allgemein handelt es sich hierbei um eine zuverlässige und günstige Möglichkeit, um die streifenförmigen Bereiche zu bilden bzw. zu erfassen. Die Stromspiegelanordnung kann in herkömmlicher Weise durch zwei zum Beispiel parallelgeschaltete (Halbleiter-) Transistoren gebildet werden und wird nachstehend anhand der Figuren beispielhaft erläutert.

Eine weitere Variante sieht vor, dass die Sensorelemente jeweils wenigstens einen PIN Detektor umfassen, der mit zwei Widerständen verbunden ist, um den daran abfallenden Strom in Leitungen einzuspeisen (insbesondere in eine Signalleitung und eine Zeilenleitung), die den streifenförmigen Bereichen zugeordneten. Der PIN Detektor kann mit einem Transimpedanzverstärker verbunden sein und dessen Ausgangsspannung kann an den entsprechenden Widerständen anliegen.

Gemäß einer weiteren erfindungsgemäßen Alternative ist vorgesehen, dass zumindest diejenigen Sensorelemente, deren empfangenes Licht zeitgleich bestimmt wird (d. h. die zeitgleich ausgelesen werden), wenigstens zwei Fotodetektorelemente umfassen, die jeweils Licht empfangen (d. h. jeweils auslesbar sind bzw. jeweils ein Messsignal bereitstellen), und wobei eines der Fotodetektorelemente mit einer Zeilenleitung und das andere mit einer Spaltenleitung verbunden ist. Die Fotodetektorelemente können als o.g. SPADS ausgebildet sein, insbesondere wenn es sich bei dem Sensorelement um ein SiPM handelt. Insbesondere, aber nicht beschränkt auf den letzteren Fall, kann ein Sensorelement bis zu sechzehn oder bis zu zweiunddreißig Fotodetektorelemente umfassen.

Mittels dieser Variante können zusätzliche Hardwareelemente, wie zum Beispiel der vorstehend erwähnte Stromspiegel, eingespart und kann dennoch eine zuverlässige parallele Auslesbarkeit der streifenförmigen Bereiche erreicht werden.

Weiter kann vorgesehen sein, dass mehr als zwei Fotodetektorelemente je Sensorelement vorgesehen sind (zum Beispiel sechzehn oder zweiunddreißig, siehe oben) und diese zu zwei vorzugsweise gleichgroßen Gruppen zusammengefasst sind, wobei die Fotodetektorelemente der einen Gruppe mit einer Zeilenleitung und die Fotodetektorelemente der einen Gruppe mit einer Spaltenleitung verbunden sind, und wobei wenigstens zwei Fotodetektorelemente der einen Gruppe wenigstens ein Fotodetektorelement der andere Gruppe zwischen sich einschließen. Anders ausgedrückt können die Fotodetektorelemente der beiden Gruppen ineinander verschachtelt angeordnet sein und/oder (vorzugsweise in Zeilen- und in Spaltenrichtung) alternierend. Allgemein können die Fotodetektorelemente der beiden Gruppen also nach Art eines Schachbrettmusters angeordnet sein. Mittels einer entsprechenden gruppenförmigen Anordnung kann eine hohe Auflösung trotz Unterteilen einzelner Sensorelemente in separate Erfassungsbereiche (d.h. in separate Fotodetektorelemente) gewährleistet werden.

Die Erfindung betrifft ferner ein Verfahren für ein Fahrzeug zum Erfassen von Entfernungsinformationen, mit den Merkmalen von Anspruch 7 und u.a. mit:

- Empfangen von Licht mit einem Sensor, das von einer Szene in der Umgebung reflektiert wird;
- Bestimmen von mehreren ersten Entfernungshistogrammen in Abhängigkeit von dem empfangenen Licht, wobei einem jeweiligen ersten Entfernungshistogramm der mehreren ersten Entfernungshistogramme ein jeweiliger erster streifenförmiger Bereich der Szene zugeordnet ist, wobei das erste Entfernungshistogramm eine Stärke von Reflexionen in einem Entfernungsbereich durch Objekte in dem zugeordneten ersten streifenförmigen Bereich umfasst;
- Bestimmen von mehreren zweiten Entfernungshistogrammen in Abhängigkeit von dem empfangenen Licht, wobei einem jeweiligen zweiten Entfernungshistogramm der mehreren zweiten Entfernungshistogramme ein jeweiliger zweiter streifenförmiger Bereich der Szene zugeordnet ist, wobei das zweite Entfernungshistogramm eine Stärke von Reflexionen in einem Entfernungsbereich durch Objekte in dem zugeordneten zweiten streifenförmigen Bereich umfasst;
- Bestimmen von einer Entfernungsinformation für einen Bereich der Szene in Abhängigkeit von den mehreren ersten Entfernungshistogrammen und den mehreren zweiten Entfernungshistogrammen, wobei der Bereich der Szene einen Kreuzungsbereich eines der ersten streifenförmigen Bereiche mit einem der zweiten streifenförmigen Bereiche umfasst;

wobei die streifenförmigen Bereiche der Szene jeweils mit streifenförmigen Bereichen des Sensors korrespondieren, und wobei für eine Mehrzahl der korrespondierenden streifenförmigen Bereichen das darin empfangene Licht zeitgleich bestimmt wird (oder, mit anderen Worten, eine Mehrzahl der korrespondierenden streifenförmigen Bereiche des Sensors zeitgleich ausgelesen werden).

Sämtliche der vorstehenden und nachstehenden Erläuterungen zu Merkmalen der Sensoranordnung können auf die gleichlautenden Merkmale des Verfahrens ebenso zutreffen. Insbesondere kann das Verfahren jeglichen weiteren Schritt und jegliches weitere Merkmal umfassen, um sämtliche der hierin im Zusammenhang mit der Sensoranordnung geschilderten Funktionen, Betriebszustände oder Effekte bereitzustellen. Insbesondere kann das Verfahren mit einer Sensoranordnung gemäß jeglicher der vorstehenden und nachstehenden Ausführungsformen ausgeführt werden.

Gemäß einer weiteren Ausführungsform der Sensoranordnugn und des Verfahrens wird die Szene mit einer Leuchtdiodenlichtquelle des Fahrzeugs beleuchtet. Die Leuchtdiodenlichtquelle kann eine Beleuchtungseinrichtung des Fahrzeugs zum Beleuchten einer Umgebung oder eines Innenraums des Fahrzeugs umfassen. Die Beleuchtungseinrichtung kann beispielsweise ein Tagfahrlicht, ein Fernlicht, ein Abblendlicht, eine Blinkerleuchte, eine Nebelleuchte oder dergleichen umfassen. Die Leuchtdiodelichtquelle kann mit einem Modulationsverfahren angesteuert werden und das Entfernungshistogramm in Abhängigkeit von dem Modulationssignal und einem Empfangssignal der Sensormatrix bestimmt werden. Das Modulationsverfahren kann beispielsweise ein frequenzmoduliertes Dauerstrichverfahren umfassen, bei welchem eine Frequenz, mit welcher die Leuchtdiodenlichtquelle moduliert wird, über eine bestimmte Zeit von einer Anfangsfrequenz zu einer Endfrequenz geändert wird. Die Modulationsfrequenz wird dabei vorzugsweise kontinuierlich von der Anfangsfrequenz zu der Endfrequenz geändert. Weiterhin kann als Modulationsverfahren ein zufälliges Frequenzmodulationsverfahren verwendet werden, bei welchem eine Frequenz, mit der die Leuchtdiodenlichtquelle moduliert wird, zufällig oder pseudozufällig geändert wird. Weiterhin kann die Leuchtdiodenlichtquelle mit einem Einfrequenzmodulationsverfahren angesteuert werden, bei welchem eine Frequenz zum Modulieren der Leuchtdiodenlichtquelle konstant ist. Schließlich kann die Leuchtdiodenlichtquelle mit einem Pulsmodulationsverfahren angesteuert werden. In Abhängigkeit von dem verwendeten Modulationsverfahren können verschiedene Auswerteverfahren verwendet werden, um die Entfernungshistogramme zu bestimmen. Beispielsweise können Korrelationsverfahren verwendet werden, welche ein Signal, welches zur Modulation der Leuchtdiodenlichtquelle verwendet wurde, mit einem Empfangsssignal der Sensormatrix korreliert werden. Bei einem anderen Auswerteverfahren kann das Modulationssignal mit dem Empfangssignal gemischt werden und die Entfernung in Abhängigkeit von der Mischfrequenz bestimmt werden. Die Entfernungshistogramme stellen im Prinzip entfernungsaufgelöste Echogramme dar, welche durch ein Objekt oder mehrere Objekte in dem streifenförmigen Erfassungsbereich erzeugt werden. Diese entfernungsaufgelösten Echogramme können mit einem Verfahren ähnlich wie bei einem Computertomographen zu einem ortsaufgelösten Bild verarbeitet werden, wobei jedem Ort des Bildes eine entsprechende Entfernung zugeordnet ist. Sämtliche der genannten Verfahren sind auch bei einem zeitgleichen Auslesen zumindest einzelner streifenförmiger Bereiche anwendbar.

Da die Entfernungshistogramme jeweils eine ganze Zeile oder eine ganze Spalte der Szene umfassen, sind weniger Sensoren mit grober Auflösung (Zeilen- oder Spaltensensoren) erforderlich oder, falls ein Matrixsensor verwendet wird, sind nur wenigen Zeilen- und Spaltenmessungen statt Messungen für jeden Bildpunkt erforderlich. Somit ist eine hohe Auflösung mit wenigen Sensoren bzw. wenigen Messungen möglich.

Gemäß der vorliegenden Erfindung wird weiterhin eine Vorrichtung zur Erfassung einer Entfernungsinformation für ein Fahrzeug bereitgestellt. Die Vorrichtung umfasst eine Lichtquelle, welche zum Beleuchten einer Szene in einer Umgebung oder innerhalb des Fahrzeugs ausgestaltet ist. Die Lichtquelle ist vorzugsweise eine Beleuchtungseinrichtung des Fahrzeugs. Weiter umfasst die Beleuchtungseinrichtung vorzugsweise Leuchtdioden zur Erzeugung des Lichts, da Leuchtdioden mit einer ausreichend hohen Frequenz moduliert werden können, um Licht bereitzustellen, welches für die nachfolgend beschriebene Bestimmung von Entfernungshistogrammen verwendet werden kann. Die Vorrichtung umfasst ferner einen Sensoranordnung der vorstehend genannten Art zum Empfangen von Licht, welches von der Lichtquelle stammt und von der Szene reflektiert wurde. Schließlich umfasst die Vorrichtung eine Verarbeitungseinheit, welche die Lichtquelle ansteuert und in Abhängigkeit von dem empfangenen Licht mehrere erste Entfernungshistogramme und mehrere zweite Entfernungshistogramme der vorstehen genannten Art bestimmt.

Die vorliegende Erfindung wird nachfolgend unter Bezugnahme auf die Zeichnung im Detail beschrieben werden.

Fig. 1 zeigt schematisch ein Fahrzeug und ein Objekt in einer Umgebung des Fahrzeugs.

Fig. 2 zeigt Schritte eines Verfahrens zur Bestimmung einer Entfernung zu einem Objekt.

Fig. 3 zeigt Schritte eines Verfahrens zur Bestimmung einer Geschwindigkeit eines Objekts.

Fig. 4 zeigt schematisch eine Schaltung einer Leuchtdiodenlichtquelle, welche zum Aussenden von Licht für eine Entfernungsmessung ausgestaltet ist.

Fig. 5 zeigt schematisch die Anordnung von Komponenten der Leuchtdiodenlichtquelle der Fig. 4 in einem gemeinsamen Halbleitergehäuse.

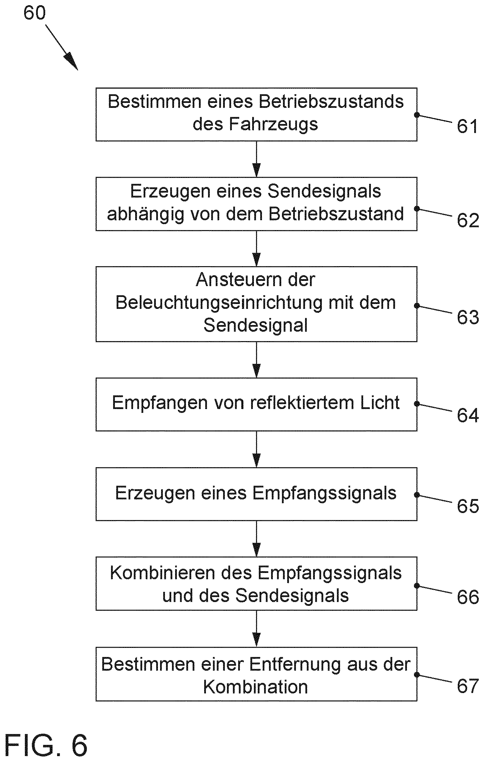

Fig. 6 zeigt Schritte eines Verfahrens zur Bestimmung einer Entfernung eines Objekts.

Fig. 7 zeigt erste Erfassungsbereiche von Sensoren einer Vorrichtung zur Bestimmung der Position eines Objekts.

Fig. 8 zeigt zweite Erfassungsbereiche von Sensoren einer Vorrichtung zur Bestimmung einer Position eines Objekts.

Fig. 9 zeigt eine Überlagerung der ersten und zweiten Erfassungsbereiche der Fig. 7 und 8, wie sie von Sensoren einer Vorrichtung zur Bestimmung einer Position eines Objekts erfasst werden.

Fig. 10 zeigt die zweiten Erfassungsbereiche der Fig. 8 mit einer zusätzlichen Unschärfe.

Fig. 11 zeigt die Überlagerung der ersten und zweiten Erfassungsbereiche der Fig. 9 mit einer zusätzlichen Unschärfe der zweiten Erfassungsbereiche.

Fig. 12 zeigt Sendersegmente, wie sie von einer Lichtquelle einer Vorrichtung zur Erfassung einer Position eines Objekts verwendet werden.

Fig. 13 zeigt Empfängersegmente, wie sie von Sensoren einer Vorrichtung zur Bestimmung einer Position eines Objekts verwendet werden.

Fig. 14 zeigt eine Überlagerung der Sendersegmente der Fig. 12 und der Empfängersegmente der Fig. 13.

Fig. 15 zeigt eine Nahfeldansicht von Sendersegmenten, welche durch eine versetzte Anordnung von Sendedioden erzeugt werden.

Fig. 16 zeigt eine Fernfeldansicht der Sendersegmente der Fig. 15.

Fig. 17 zeigt Verfahrensschritte eines weiteren Verfahrens zur Bestimmung von Entfernungsinformationen.

Fig. 18 zeigt eine Szene mit einem Objekt in einer Umgebung eines Fahrzeugs.

Fig. 19 zeigt Entfernungshistogramme von Zeilen der Szene der Fig. 18.

Fig. 20 zeigt Entfernungshistogramme von Spalten der Szene der Fig. 18.

Fig. 21 zeigt ein Fahrzeug, welches gleichzeitig eine Entfernung zu einem vorausfahrenden Fahrzeug misst und Daten überträgt.

Fig. 22 zeigt Schritte eines Verfahrens zur Bestimmung einer Entfernung eines Objekts und zum Übertragen von Sendedaten.

Figur 23 zeigt einen schematischen Ausschnitt einer beispielhaften erfindungsgemäßen Sensoranordnung, die ein erfindungsgemäßes Verfahren gemäß einem Ausführungsbeispiel ausführt.

In Figur 24 zeigt einen schematischen schematischer Ausschnitt einer erfindungsgemäßen Sensoranordnung gemäß einem weiteren Ausführungsbeispiel.

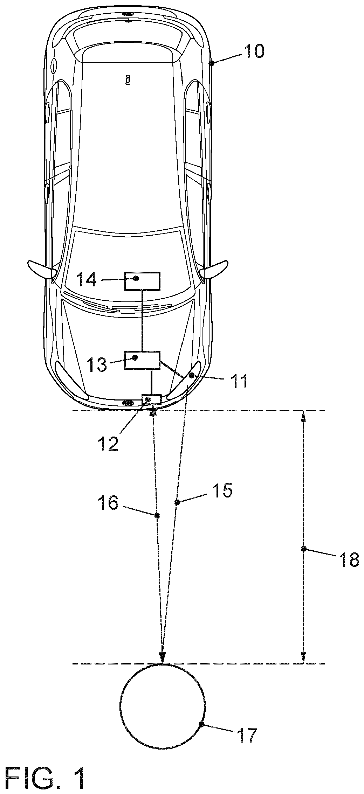

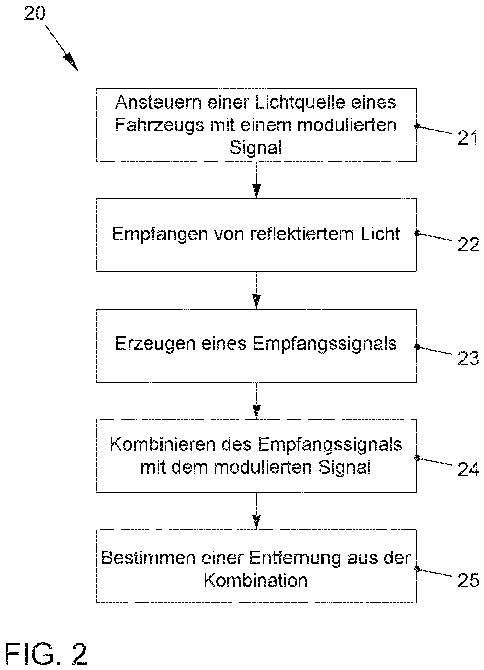

Fig. 1 zeigt ein Fahrzeug 10 mit einer Vorrichtung zur Bestimmung einer Entfernungsinformation. Die Vorrichtung umfasst eine Lichtquelle 11, welche zum Beleuchten eines Objekts 17 in einer Umgebung des Fahrzeugs 10 ausgestaltet ist. Die Lichtquelle 11 kann beispielsweise ein Tagfahrlicht, ein Abblendlicht, eine Blinkerleuchte, ein Rücklicht, ein Fernlicht, einen Nebelscheinwerfer, oder eine Rückfahrleuchte des Fahrzeugs 10 umfassen. Die Lichtquelle kann ferner eine oder mehrere Leuchtdioden umfassen, welche Licht zur Ausleuchtung der Umgebung des Fahrzeugs 10 oder ein Signalisierungslicht, z.B. das Licht einer Blinkerleuchte oder einer Bremsleuchte, erzeugen. Die Lichtquelle 11 kann darüber hinaus auch eine Beleuchtungseinrichtung zum Beleuchten eines Innenraums des Fahrzeugs 10 umfassen, wie z.B. eine Armaturenbrettbeleuchtung, oder eine Fahrgastraumbeleuchtung. Die Vorrichtung zur Bestimmung der Entfernungsinformation umfasst ferner einen optischen Sensor 12 zum Empfangen von von dem Objekt 17 reflektiertem Licht und eine Verarbeitungseinheit 13, welche mit der Lichtquelle 11 und dem Sensor 12 gekoppelt ist. Wenn sich bei der in Fig. 1 gezeigten Anordnung das Objekt 17 beispielsweise in einer Entfernung 18 im Bereich vor dem Fahrzeug 10 befindet, wird Licht 15, welches von der Lichtquelle 11 ausgesendet wurde, von dem Objekt 17 reflektiert und als reflektiertes Licht 16 von dem Sensor 12 empfangen. Die Arbeitsweise der Vorrichtung zur Bestimmung einer Entfernungsinformation wird nachfolgend unter Bezugnahme auf Fig. 2 beschrieben.

Fig. 2 zeigt ein Verfahren 20 für das Fahrzeug 10 zum Bestimmen der Entfernung 18 zwischen dem Fahrzeug 10 und dem Objekt 17. Im Schritt 21 wird die Lichtquelle 11 des Fahrzeugs 10 mit einem modulierten Signal an gesteuert. Das modulierte Signal wird von der Verarbeitungseinheit 13 erzeugt. Das Licht 15, welches von der Lichtquelle 11 abgegeben wurde, wird von dem Objekt 17 reflektiert und als reflektiertes Licht 16 von dem Sensor 12 empfangen (Schritt 22). Im Schritt 23 wird ein Empfangssignal in Abhängigkeit von dem empfangenen reflektierten Licht 16 erzeugt. Das Empfangssignal kann beispielsweise ein analoges oder digitales elektrisches Signal umfassen. Im Schritt 24 wird das Empfangssignal mit dem modulierten Signal in der Verarbeitungseinheit 13 kombiniert. Beispielsweise können das modulierte Signal und das Empfangssignal korreliert werden oder gemischt werden, wie es nachfolgend im Detail beschrieben werden wird. Die Entfernung 18 zu dem Objekt 17 wird im Schritt 25 aus einem Kombinationssignal, beispielsweise einem Korrelationssignal oder einem Mischsignal bestimmt. Die so bestimmte Entfernung zu dem Objekt 17 kann beispielsweise einem Fahrerassistenzsystem 14 des Fahrzeugs 10 bereitgestellt werden. Das Fahrerassistenzsystem 14 kann beispielsweise eine adaptive Geschwindigkeitsregelungsanlage, ein Bremsassistenzsystem, ein Einparkhilfesystem oder ein Kollisionswarnsystem umfassen. Das Objekt 17 kann sich auch im Innenraum des Fahrzeugs 10 befinden und von einer entsprechenden Beleuchtungseinrichtung des Fahrzeugs im Innenraum beleuchtet werden und mit einem entsprechendem Sensor das reflektierte Licht von dem Objekt empfangen werden. Dadurch können Entfernungen zu Objekten im Innenraum des Fahrzeugs bestimmt werden, beispielsweise um Gesten eines Bediensystems zu erkennen oder um beispielsweise bei einem Unfall eine aktuelle Position eines Kopfes eines Insassen zu erfassen, um entsprechende Schutzmechanismen, wie z.B. Airbags, auszulösen.

Damit das zuvor beschriebene Verfahren im Fahrzeug für unterschiedliche Fahrerassistenzsysteme verwendet werden kann, kann es notwendig sein, für die unterschiedlichen Anwendungsfälle unterschiedliche Sende- und Empfangsverfahren zu verwenden. Diese Verfahren können beispielsweise je nach benötigter Entfernung oder Anwendung ausgewählt werden. Dazu kann beispielsweise ein Betriebszustand des Fahrzeugs 10 bestimmt werden und ein entsprechendes Sende- und Empfangsverfahren in Abhängigkeit von dem Betriebszustand des Fahrzeugs ausgewählt werden, d.h. ein entsprechendes Modulationsverfahren zum Erzeugen des modulierten Signals und ein entsprechendes Auswerteverfahren (z.B. Mischen oder Korrelieren) werden in Abhängigkeit von dem Betriebszustand ausgewählt. Das Modulationsverfahren kann beispielsweise ein frequenzmoduliertes Dauerstrichverfahren, ein zufälliges Frequenzmodulationsverfahren, ein Einfrequenzmodulationsverfahren oder ein Pulsmodulationsverfahren umfassen. Diese Verfahren werden nachfolgend im Detail beschrieben werden. Der Betriebszustand des Fahrzeugs kann beispielsweise eine Geschwindigkeit des Fahrzeugs, einen Aktivierungszustand einer Lichtquelle des Fahrzeugs, welche anzeigt, ob die Lichtquelle zum Beleuchten einer Umgebung des Fahrzeugs oder zum Ausgeben eines optischen Signals eingeschaltet ist oder nicht, eine Fahrtrichtung des Fahrzeugs, eine zuvor bestimmte Positionsinformation oder Entfernungsinformation eines Objekts in der Umgebung des Fahrzeugs, Witterungsbedingungen in der Umgebung des Fahrzeugs oder eine Art einer Assistenzvorrichtung des Fahrzeugs, welcher die Entfernungsinformation bereitgestellt wird, umfassen.

Bei dem frequenzmodulierten Dauerstrichverfahren, welches auch als FMCW (Frequency Modulated Continuous Wave) oder auch als Chirp-Verfahren bezeichnet wird, wird eine Modulationsfrequenz über eine bestimmte Zeit von einer Anfangsfrequenz zu einer Endfrequenz geändert. Vorzugsweise wird die Modulationsfrequenz kontinuierlich von der Anfangsfrequenz zu der Endfrequenz geändert. Das Verfahren kann, wie später gezeigt werden wird, nicht nur zur Entfernungsmessung, sondern auch für eine Geschwindigkeitsmessung des Objekts 17 verwendet werden. Die Erzeugung von Modulationssignalen, bei welchen eine Modulationsfrequenz über eine bestimmte Zeit kontinuierlich von einer Anfangsfrequenz zu einer Endfrequenz geändert wird, ist in dem Stand der Technik bekannt und daher kann das Verfahren einfach implementiert werden, beispielsweise indem eine synthetisch erzeugte Wellenform ausgetastet wird. Mit dem Verfahren kann die Entfernung 18 zu dem Objekt 17 kontinuierlich gemessen werden, wodurch das Verfahren besonders für Lichtquellen 11 geeignet ist, welche kontinuierlich eingeschaltet sind. Durch das kontinuierliche Ändern der Modulationsfrequenz und somit der Sendefrequenz der Lichtquelle 11 von einer Anfangsfrequenz zu einer Endfrequenz ergibt sich eine Frequenzrampe. Durch Mischen des Sendesignals mit dem Empfangssignal, welches von dem Sensor 12 empfangen wird, können sowohl der Abstand 18 als auch die Geschwindigkeit des Objekts 17 direkt gemessen werden. Bei der Verwendung von Leuchtdioden (LED) als Lichtquelle 11, welche typische Ansprechzeiten von 5-10 nsec aufweisen, können Modulationsfrequenzen bis beispielsweise maximal 100 MHz genutzt werden. Die FMCW-Modulation kann somit beispielsweise die Sendefrequenz von 10 MHz bis 100 MHz kontinuierlich über einen Zeitraum von beispielsweise 0,5-400 µsec verwenden. Die Entfernungsmessung kann bei Verwendung des frequenzmodulierten Dauerstrichverfahrens (FMCW) wahlweise mittels einer Frequenzmischung oder eines Korrelationsverfahrens erfolgen.

Bei der Verwendung des frequenzmodulierten Dauerstrichverfahrens können das Sende- und das Empfangssignal mit einem Frequenzmischer verglichen werden. Ein Objekt in einer bestimmten Entfernung erzeugt eine Mischfrequenz, welche proportional zu der Entfernung ist. Die Ortsauflösung von mehreren Objekten ist eine Funktion der Auflösung der Frequenzmessung und damit der Messzeit. Ein derartiges Frequenzmischverfahren kann beispielsweise als eine analoge Schaltung in einem integrierten Schaltkreis realisiert werden. Wenn beispielsweise eine Entfernung zwischen 0 m und 40 m gemessen werden soll, braucht das Licht für diese Entfernung hin und zurück entlang der Pfeile 15 und 16 der Fig. 1 circa 3,3 nsec/m x 40 m x 2 = 264 nsec. Daraus ergibt sich eine nützliche Signallänge für das FMCW-Signal von ca. 500 nsec. Eine Modulation bis herunter auf 10 MHz für dieses Verfahren ist daher zu gering, so dass vorzugsweise ein Frequenzhub zwischen 50 und 100 MHz verwendet werden sollte, welcher über 500 nsec linear verändert wird. Bei einer Entfernung 18 von beispielsweise 25 m zwischen dem Fahrzeug 10 und dem Objekt 17 wird das Empfangssignal gegenüber dem Sendesignal um 165 nsec verzögert. Wie zuvor beschrieben, weist das Sendesignal durch die Modulation einen Frequenzhub von 50 MHz/500 nsec = 100 kHz/nsec auf. Bei einer Signalverzögerung des Empfangssignals von 165 nsec hat das Empfangssignal eine um 16,5 MHz niedrigere Frequenz als das Sendesignal. Durch Mischen des Sendesignals mit dem Empfangssignal erhält man bei der Beispieldistanz von 25 m eine Frequenz von 16,5 MHz. Allgemein ausgedrückt ergibt sich durch das Mischen eine Frequenz von 0,66 MHz pro Meter Abstand.

Bei der Entfernungsmessung mittels des frequenzmodulierten Dauerstrichverfahrens können das Sendesignal und das Empfangssignal auch miteinander korreliert werden, um auf der Grundlage eines so erzeugten Korrelationssignals die Entfernung zu dem Objekt 17 zu bestimmen. Dazu wird das modulierte Signal, welches ausgesendet wurde, zeitlich verschoben mit dem Empfangssignal korreliert. Es ergibt sich ein Korrelationsmaximum zu der Verschiebungszeit, welche zu der Entfernung 18 des Objekts 17 proportional ist. Da im Wesentlichen verrauschte Signale ausgewertet werden, ist die Höhe des Korrelationsmaximums ein Maß für die Signalstärke, so dass verschiedene Objekte 17 unterschieden werden können. Die Auflösung in der Entfernung kann beispielsweise durch die Abtastfrequenz des Empfangssignals bestimmt werden. Zum Erzeugen des Korrelationssignals können mehrere Korrelationskoeffizienten erzeugt werden. Dabei wird jedem Korrelationskoeffizienten der mehreren Korrelationskoeffizienten eine jeweilige Verschiebungszeit zugeordnet. Jeder Korrelationskoeffizienten wird durch korrelieren des um die jeweils zugeordnete Verschiebungszeit verschobenen modulierten Signals mit dem Empfangssignal gebildet. Die Entfernung zu dem Objekt wird in Abhängigkeit von den mehreren Korrelationskoeffizienten, beispielsweise durch Bestimmen eines absoluten oder lokalen Maximums, und den zugeordneten Verschiebungszeiten bestimmt. Dabei ist es vorteilhaft, eine hohe Signifikanz des Signals in der Zeitebene durch das kontinuierlich modulierte FMCW-Signal, welches viele, voneinander unabhängige Frequenzen enthält, zu nutzen. Um eine hohe Abtastrate des Empfangssignals zu erreichen, kann beispielsweise eine Ein-Bit-Wandlung vorteilhaft sein. Zur Erzeugung des binären Empfangssignals kann das Empfangssignal mit einem ersten Signalwert erzeugt werden, wenn ein Pegel des empfangenen Lichts eine bestimmte Intensität unterschreitet, und ein Empfangssignal mit einem zweiten Signalwert erzeugt werden, wenn der Pegel des empfangenen Lichts die bestimmte Intensität erreicht oder überschreitet. Dazu kann beispielsweise ein amplitudenbegrenzender Verstärker verwendet werden, welcher in Abhängigkeit von dem empfangenen Licht ein Empfangssignal mit eindeutigen Pegeln, beispielsweise einer binären Folge von Nullen und Einsen, erzeugt. Da die Signifikanz in der Zeit liegt, geht durch diese binäre Wandlung kaum Information verloren, da die Signifikanz in der Amplitude aufgrund der zu erwartenden Amplitudenmodulation durch das Objekt 17 unzuverlässig sein kann. Durch das auf binäre Signale reduzierte Empfangssignal kann ein entsprechender Korrelator verhältnismäßig einfach aufgebaut sein und zur Verarbeitung langer Sequenzen geeignet sein. Dies verbessert das Korrelationsergebnis. Wenn das Empfangssignal digital oder binär vorliegt, ist es vorteilhaft, dass das Vergleichsmuster des modulierten Sendesignals ebenfalls digital ist. Dies kann beispielsweise erreicht werden, indem zur Modulation der Lichtquelle ein synthetisiertes digitales Signal verwendet wird. Dies kann beispielsweise mit gleichbleibender Qualität und nur abhängig von einem Sendetakt erzeugt werden. Wenn der Empfangstakt gleich dem Sendetakt ist, können auftretende Fehler, beispielsweise aufgrund von Temperaturdriften, kompensiert werden. Durch die Verwendung des Korrelationsverfahrens können lange Signalfolgen verwendet werden. Der nutzbare Frequenzhub ist somit nicht auf die Laufzeit des Signals für die zu messende Distanz beschränkt. Wie zuvor beschrieben, kann das Verfahren rein digital realisiert werden und daher kostengünstig aufgebaut werden. Beispielsweise kann ein moduliertes Signal mit einer Länge von 50 μsec - 500 μsec ausgesendet werden und über dieser Zeit die Frequenz von 10 MHz auf 100 MHz gesteigert werden. Ein derartiges moduliertes Signal lässt sich beispielsweise über ein Schieberegister erzeugen, in welchem ein synthetisch erzeugtes Signal abgelegt ist. Eine Taktfrequenz, mit welcher synchron das Sendesignal ausgetaktet und das Empfangssignal eingetaktet werden kann, kann beispielsweise 1 GHz betraten und ist daher mit verhältnismäßig geringem Aufwand realisierbar. Die Messzeit von 50 μsec - 500 μsec ist für die meisten Anwendungen von Fahrerassistenzsystemen so schnell, dass auch Multiplexverfahren bei Mehrkanalsensoren möglich sind. Darüber hinaus können mehrere Messungen durchgeführt und gemittelt werden, um die Signalqualität weiter zu verbessern.

Das modulierte Signal, mit welchem die Lichtquelle 11 angesteuert wird, kann weiterhin mit einem zufälligen Frequenzmodulationsverfahren erzeugt werden. Dabei wird eine Sendefrequenz aus einem Frequenzband über eine bestimmte Zeit zufällig variiert. Dieses Verfahren wird auch als Random Frequency Modulation (RFM) bezeichnet. Zur Bestimmung der Entfernung zu dem Objekt 17 kann das zuvor beschriebene Korrelationsverfahren in vergleichbarer Art und Weise verwendet werden. Das zufällige Frequenzmodulationsverfahren bietet eine sehr hohe Störsicherheit, beispielsweise gegenüber Streulicht- und anderen Messverfahren. Darüber hinaus können mehrere Messkanäle simultan gemessen werden, da entsprechende Übersprecher von anderen Messkanälen durch die Korrelationsauswertung unterdrückt werden. Die Modulationsfrequenzen und die zeitliche Länge des Sendesignals können vergleichbar zu denen des frequenzmodulierten Dauerstrichverfahrens gewählt werden. Das zufällige Frequenzmodulationsverfahren kann somit insbesondere dann verwendet werden, wenn mehrere Lichtquellen gleichzeitig eine Szene oder einen Raum beleuchten und mit allen gleichzeitig gemessen werden soll. Beispielsweise können mit dem zufälligen Frequenzmodulationsverfahren Messungen mit allen Scheinwerfern des Fahrzeugs 10 gleichzeitig durchgeführt werden. Jede Lichtquelle bekommt dabei eine eigene signifikante Signatur, welche dann durch das Korrelationsverfahren unterschieden werden kann. Darüber hinaus können gleichzeitig Daten, welche in das Modulationssignal eincodiert werden, an andere Fahrzeuge oder Empfänger am Straßenrand übertragen werden. Für eine kontinuierliche Entfernungsmessung ist eine kontinuierliche Ansteuerung der Lichtquelle 11 erforderlich, so dass dieses Verfahren besonders für Lichtquellen geeignet ist, welche dauerhaft eingeschaltet sind, wie z.B. ein Tagfahrlicht oder ein Scheinwerfer bei einer Nachtfahrt. Das zuvor beschriebene frequenzmodulierte Dauerstrichverfahren und das zuvor beschriebene zufällige Frequenzmodulationsverfahren können auch kombiniert verwendet werden. Beispielsweise kann wegen der besseren Signalqualität zunächst mit dem frequenzmodulierten Dauerstrichverfahren gearbeitet werden. Wenn Störer detektiert werden, beispielsweise Lichtquellen anderer Fahrzeuge, kann auf das zufällige Frequenzmodulationsverfahren umgeschaltet werden. Ebenso kann zumindest zeitweise auf das zufällige Frequenzmodulationsverfahren umgeschaltet werden, wenn eine Datenübertragung erforderlich ist. Die Lichtquelle 11 und der Sensor 12 können gleichermaßen für das frequenzmodulierte Dauerstrichverfahren wie für das zufällige Frequenzmodulationsverfahren verwendet werden.

Bei dem Verfahren zur Bestimmung der Entfernung zu dem Objekt 17 kann ferner ein Einfrequenzmodulationsverfahren zum Erzeugen des modulierten Signals zum Ansteuern der Lichtquelle 11 verwendet werden. Das Einfrequenzmodulationsverfahren verwendet eine konstante Modulationsfrequenz und ist daher besonders einfach zu realisieren. Demgegenüber kann es jedoch verhältnismäßig einfach durch Nebel, Gischt, Staub oder fremde Lichtquellen gestört werden und kann daher insbesondere in Anwendungen eingesetzt werden, wo derartige Störungen beispielsweise durch den Einbauort nicht auftreten können, oder wenn ein temporärer Ausfall toleriert werden kann, wie z.B. bei einer Entfernungsmessung im Innenraum oder bei Einparkhilfen, bei denen ein zu nahes Messen keine negativen Folgen hat und durch die niedrige Geschwindigkeit des Fahrzeugs die notwendigen Abstände gering sind oder eine Gischtentwicklung unerheblich ist. Für eine kontinuierliche Entfernungsmessung ist bei dem Einfrequenzverfahren ebenfalls eine permanent aktive Lichtquelle notwendig, so dass das Einfrequenzverfahren vorzugsweise in Verbindung mit beispielsweise einem Tagfahrlicht oder einem Abblendlicht des Fahrzeugs verwendet werden kann. Eine Entfernungsbestimmung, d.h. eine Auswertung des Einfrequenzmodulationsverfahrens, kann beispielsweise auf eine Phasenmessung zurückgeführt werden, welche eine Phasendifferenz zwischen dem modulierten Signal und dem Empfangssignal bestimmt. Beispielsweise kann die Phasenmessung durch einen Vergleich des Empfangssignals mit dem modulierten Signal digital über eine Und-Verknüpfung erfolgen. Geeignete typische Modulationsfrequenzen liegen beispielsweise im Bereich von 5-20 MHz. In diesem Bereich kann eine Eindeutigkeit der auf der Basis der Einfrequenzmodulation basierenden Phasenauswertung sichergestellt werden.

Schließlich kann zur Erzeugung des modulierten Signals zum Ansteuern der Lichtquelle 11 ein Pulsmodulationsverfahren verwendet werden. Mit dem Pulsmodulationsverfahren kann insbesondere auch dann gemessen werden, wenn die Lichtquelle 11 ausgeschaltet ist. Die kurzen Lichtimpulse des Pulsmodulationsverfahrens können so gestaltet werden, dass sie für den Betrachter nicht oder kaum sichtbar sind. Wenn eine Lichtquelle eingeschaltet ist, kann ebenfalls mit dem Pulsmodulationsverfahren gearbeitet werden, indem die Lichtquelle für die Pulsdauer ausgestaltet wird, oder anders ausgedrückt, indem "negative" Lichtimpulse erzeugt werden. Das Pulsmodulationsverfahren bietet sich daher insbesondere dort an, wo mit einer geringen Messfrequenz von beispielsweise 10 bis 100 Hz gemessen werden soll und das Licht zur Messung nicht erkennbar sein soll. Lichtquellen, wie zum Beispiel ein Abblendlicht, eine Blinkerleuchte, ein Rücklicht, eine Bremsleuchte oder eine Rückfahrleuchte, welche zur Messzeit nicht eingeschaltet sind, können mit kurzen Impulsen mit einer Länge von beispielsweise 10 bis 100 nsec, eingeschaltet werden, welche von einem menschlichen Beobachter wegen der geringen mittleren Leistung nicht bemerkt werden. Bei eingeschalteten Lichtquellen kann das Licht für einen kurzen Zeitraum von beispielsweise 10 bis 100 nsec ausgeschaltet werden, wodurch ein negativer Lichtpuls entsteht, welcher von dem Sensor 12 ebenfalls detektiert werden kann. Die Bestimmung der Entfernung 18 zu dem Objekt 17 kann bei Verwendung des Pulsmodulationsverfahrens beispielsweise mit dem zuvor beschriebenen Korrelationsverfahren erfolgen. Insbesondere kann eine Pulsmodulation verwendet werden, welche aus einer Pulsfolge besteht, die über ungleichförmige Pulsabstände eine hohe zeitliche Signifikanz aufweist. Das in Abhängigkeit von dem empfangenen Licht erzeugte Empfangssignal kann wiederum mit dem modulierten Signal korreliert werden oder alternativ kann als Korrelationsmuster für die Pulsmodulation auch eine mathematische Beschreibung des Pulses dienen. Das Empfangssignal kann über den Messabstand hinweg abgetastet werden. Über ein Oversampling-Verfahren können mehrere solcher Echogramme aufgenommen und als Entfernungshistogramm aufsummiert werden. Dann können mit einer Pulsauswertung Echopulse erkannt und zum Beispiel mit einer Schwerpunktbestimmung eine genaue Entfernung 18 ermittelt werden. Das Verfahren ist sowohl für positive als auch negative Pulse geeignet.

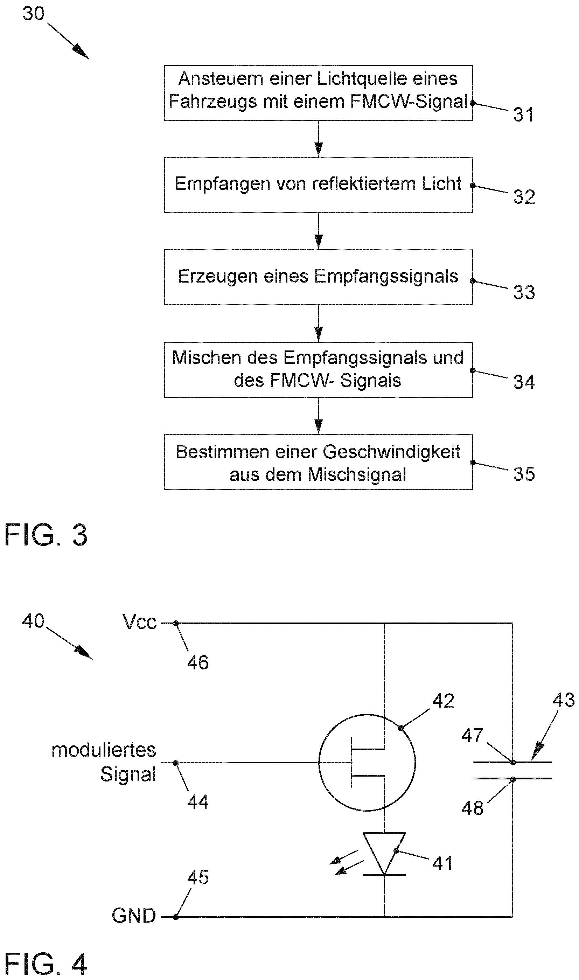

Wie bereits zuvor in Verbindung mit dem frequenzmodulierten Dauerstrichverfahren erwähnt wurde, kann neben der Entfernung 18 zu dem Objekt 17 auch eine Geschwindigkeit des Objekts 17 bestimmt werden. Dies wird nachfolgend unter Bezugnahme auf Fig. 3 im Detail beschrieben werden. Fig. 3 zeigt ein Verfahren 30 zum Bestimmen einer Geschwindigkeit des Objekts 17. Im Schritt 31 wird die Lichtquelle 11 des Fahrzeugs 10 mit einem frequenzmodulierten Signal angesteuert. Im Schritt 32 wird das reflektierte Licht 16 empfangen, welches von der Lichtquelle 11 abgegeben wurde und von dem Objekt 17 in der Umgebung des Fahrzeugs 11 reflektiert wurde. Im Schritt 33 wird ein Empfangssignal in Abhängigkeit von dem empfangenen Licht 16 erzeugt. Im Schritt 34 wird eine Differenzfrequenz zwischen einer Frequenz des frequenzmodulierten Signals, mit welchem die Lichtquelle 11 angesteuert wurde, und einer Frequenz des Empfangssignals durch Mischen der beiden Signale bestimmt. Auf dem Mischsignal, d.h., in Abhängigkeit von der Differenzfrequenz, wird eine Geschwindigkeitsinformation des Objekts 17 im Schritt 35 bestimmt. Das frequenzmodulierte Signal kann insbesondere gemäß dem zuvor beschriebenen frequenzmodulierten Dauerstrichverfahren erzeugt werden, bei welchem die Modulationsfrequenz des frequenzmodulierten Signals über eine bestimmte Zeit von einer Anfangsfrequenz zu einer Endfrequenz geändert wird. Wie zuvor beschrieben, kann auch eine Entfernungsinformation zu dem Objekt 17 in Abhängigkeit von dem Empfangssignal und der Frequenz des frequenzmodulierten Signals bestimmt werden, beispielsweise durch Mischen der Signale oder Korrelieren der Signale. Die Frequenz des frequenzmodulierten Signals liegt vorzugsweise in einem Bereich von 10 bis 200 MHz.

Das Verfahren wird nachfolgend beispielhaft anhand einer Modulation mit Hilfe eines frequenzmodulierten Dauerstrichverfahrens (FMCW) im Detail beschrieben werden. Bei der FMCW-Modulation wird ein kontinuierlicher Frequenzhub von beispielsweise 10 MHz bis 100 MHz in 40 Mikrosekunden moduliert. Durch einen Abstand von 200 Metern zwischen dem Fahrzeug 10 und dem Objekt 17 ergibt sich eine Verschiebung um 1,32 μs oder 2.97 MHz. Durch eine relative Geschwindigkeit von v ergibt sich eine weitere Mischsequenz gemäß der Dopplerformel:

$$f = \left( \frac{c}{c+v} \right) \cdot f_0$$

wobei f die Modulationsfrequenz ist, $f_0$ die Frequenz des Empfangssignals ist und c die Lichtgeschwindigkeit ist. In der nachfolgenden Tabelle wird die Dopplerfrequenzverschiebung für verschiedene Geschwindigkeiten des Objekts dargestellt.

| Doppler-Frequenz | | Modulations-Frequenz | | | | |
| --- | --- | --- | --- | --- | --- | --- |
| | | 20 MHz | 40 MHz | 60 MHz | 80 MHz | 100 MHz |
| Geschwindigkeit | 20 km/h | 0.37 Hz | 0.74 Hz | 1.11 Hz | 1.48 Hz | 1.85 Hz |
| | 40 km/h | 0.74 Hz | 1.48 Hz | 2.22 Hz | 2.96 Hz | 3.70 Hz |
| | 60 km/h | 1.11 Hz | 2.22 Hz | 3.33 Hz | 4.44 Hz | 5.56 Hz |
| | 80 km/h | 1.48 Hz | 2.96 Hz | 4.44 Hz | 5.93 Hz | 7.41 Hz |
| | 100 km/h | 1.85 Hz | 3.70 Hz | 5.56 Hz | 7.41 Hz | 9.26 Hz |
| | 120 km/h | 2.22 Hz | 4.44 Hz | 6.67 Hz | 8.89 Hz | 11.11 Hz |
| | 140 km/h | 2.59 Hz | 5.19 Hz | 7.78 Hz | 10.37 Hz | 12.96 Hz |
| | 160 km/h | 2.96 Hz | 5.93 Hz | 8.89 Hz | 11.85 Hz | 14.81 Hz |
| | 180 km/h | 3.33 Hz | 6.67 Hz | 10.00 Hz | 13.33 Hz | 16.67 Hz |
| | 200 km/h | 3.70 Hz | 7.41 Hz | 11.11 Hz | 14.81 Hz | 18.52 Hz |
| | 220 km/h | 4.07 Hz | 8.15 Hz | 12.22 Hz | 16.30 Hz | 20.37 Hz |
| | 240 km/h | 4.44 Hz | 8.89 Hz | 13.33 Hz | 17.78 Hz | 22.22 Hz |
| | 260 km/h | 4.81 Hz | 9.63 Hz | 14.44 Hz | 19.26 Hz | 24.07 Hz |

Die Tabelle zeigt, dass die Dopplerfrequenz von der Modulationsfrequenz abhängt. Eine höhere Modulationsfrequenz führt auch zu einer höheren Dopplerfrequenz. Die FMCW-Modulation kann daher beispielsweise so geändert werden, dass in beispielsweise 20 μs die Frequenz von 10 MHz auf 100 MHz moduliert wird und dann für weitere 20 μs die Frequenz von 100 MHz gehalten wird. Die Dopplerfrequenz kann dann beispielsweise bei 100 MHz gemessen werden. Die Dopplerfrequenz kann beispielsweise durch Mischen der Sendefrequenz mit der Empfangsfrequenz direkt bestimmt werden. Aus praktischen Gründen kann jedoch alternativ die Dopplerfrequenz durch Mischen des Empfangssignals mit einem weiteren Signal bestimmt werden, welches eine um einen vorbestimmten Wert von der Frequenz des frequenzmodulierten Sendesignals abweichende Frequenz aufweist. Beispielsweise kann das Empfangssignal mit einem Signal verglichen oder gemischt werden, welches eine um 100 kHz niedrigere Frequenz als das frequenzmodulierte Sendesignal aufweist. Dadurch erhält man für die Dopplerfrequenz bei dem in der Tabelle gezeigten Beispiel Frequenzen zwischen 100.000 und 100.024 Hz für Geschwindigkeiten zwischen 0 und 260 km/h. Diese deutlich höheren Frequenzen können einfacher gemessen werden und können innerhalb der Messdauer von beispielsweise 20 μs entstehen.

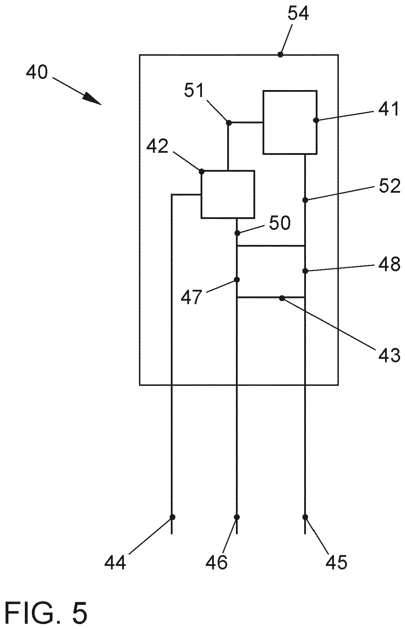

Wie zuvor beschrieben wurde ist die Lichtquelle 11 des Fahrzeugs 10 beispielsweise in einem Frequenzbereich von 10 MHz bis 100 MHz zu modulieren. Dazu eignen sich insbesondere Leuchtdiodenlichtquellen, welche Halbleiterleuchtdioden zur Erzeugung des Lichts 15 verwenden. Insbesondere Leuchtdioden, welche ultraviolettes oder blaues Licht erzeugen, weisen eine derartig große Modulationsbandbreite auf. Für die Farbumsetzung in weißes Licht oder andersfarbige Lichtkomponenten, wie zum Beispiel rotes oder grünes Licht, können diese Leuchtdioden zusätzlich Phosphorbeschichtungen aufweisen, welche ultraviolettes Licht oder blaues Licht in andersfarbiges Licht umsetzen. Das hochfrequente Licht zur Entfernungsmessung oder Geschwindigkeitsmessung ist insbesondere das blaue Licht der Leuchtdioden. Die Ströme durch die Leuchtdioden liegen im Bereich von einigen Ampere, um entsprechende Leuchtreichweiten zu erreichen. Um eine effiziente Modulation zu erreichen, muss eine entsprechende Ansteuerung der Leuchtdiode entsprechend ausgelegt werden. Fig. 4 zeigt eine Leuchtdiodenlichtquelle 40, welche auch als Modulationskreis bezeichnet wird und welche eine entsprechende Auslegung aufweist. Die Leuchtdiodenlichtquelle 40 umfasst eine Leuchtdiode 41, ein Schaltelement 42 und Energiespeicherelement 43. Die Leuchtdiode 41 kann, wie zuvor beschrieben, vorzugsweise eine Leuchtdiode umfassen, welche blaues Licht erzeugt oder zumindest einen Blaulichtanteil aufweist. Das Schaltelement 42 kann beispielsweise einen Transistor, insbesondere einen Feldeffekttransistor umfassen. Das Energiespeicherelement kann beispielsweise einen Kondensator umfassen. Das Schaltelement 42 wird von einem modulierten Signal 44 angesteuert. Eine Energieversorgung umfasst einen Masseanschluss (GND) 45 und einen Stromversorgungsanschluss (Vcc) 46. Wenn das Schaltelement 42 aufgrund einer Ansteuerung von dem modulierten Signal 44 durchschaltet, fließt ein Strom von dem Versorgungsspannungsanschluss 46 durch die Leuchtdiode 41 zu dem Masseanschluss 45 und darüber hinaus ein weiterer Strom einer in dem Energiespeicherelement 43 gespeicherten Ladung von einem ersten Anschluss 47 durch das Schaltelement 42 und die Leuchtdiode 41 zu einem zweiten Anschluss 48 des Energiespeicherelements 43. Aufgrund der hohen Schaltfrequenzen ist ein Aufbau mit möglichst kurzen Leitungen insbesondere zwischen den Elementen 41, 42 und 43 anzustreben, damit die Induktivität der Leitungen möglichst gering ist und somit Verluste, eine Störanfälligkeit und insbesondere eine abgestrahlte Störstrahlung möglichst gering sind. Im gesperrten Zustand des Schaltelements 42 wird das Energiespeicherelement 43 von der Versorgungsspannung 46 und dem Masseanschluss 45 aufgeladen. Im durchgeschalteten Zustand des Schaltelements 42 stellt das Energiespeicherelement für einen kurzen Zeitraum einen sehr großen Strom durch die Leuchtdiode 41 zur Verfügung. Daher sind insbesondere die Verbindungen zwischen dem Energiespeicherelement 43, dem Schaltelement 42 und der Leuchtdiode 41 möglichst kurz zu halten. Wenn die Leitungen im Kreis Leuchtdiode 41, Schalter 42 und Energiespeicher 43 zu lang werden, stellen sie eine Induktivität dar, welche sich jeder Stromänderung "entgegenstemmt". Dadurch ist eine sehr hohe Spannung erforderlich, um eine Modulation, welche eine schnelle Stromänderung darstellt, erzeugen zu können. Dabei können schon wenige Millimeter Leitungslänge einen erheblichen Einfluss haben. Die Energie, welche bei der Modulation in den Leitungen gespeichert wird, wird zum Teil in den Leitungen absorbiert und in Wärme umgewandelt und zu einem anderen Teil als Störstrahlung abgestrahlt. Um beispielsweise 10 W Licht mit der Leuchtdiode 41 zu erzeugen, ist durch die Leuchtdiode 41 ein Strom von näherungsweise 10 Ampere erforderlich. Wenn der Lichtpuls beispielsweise 50 nsec lang sein soll, sind bei einem verdrahteten Aufbau, bei welchem die Leuchtdiode 41, das Schaltelement 42 und der Kondensator 43 als separate Elemente auf einer gedruckten Schaltung angeordnet sind, näherungsweise 200 Volt erforderlich. Demzufolge ist ein Energiebedarf von 200 V x 10 A x 50 nsec = 0,1 mJ erforderlich. Bei einem Aufbau in SMD-Technik sind beispielsweise 60 V und 10 A notwendig, d.h., ein Energiebedarf von 30 $\mu$J. Bei einem optimierten Aufbau, welcher nachfolgend in Verbindung mit Fig. 5 gezeigt werden wird, sind jedoch nur 8 V und 10 A erforderlich, d.h., ein Energiebedarf von 4 $\mu$J. In allen Fällen werden ca. 40 W in der Leuchtdiode 41 absorbiert. Der Wirkungsgrad beträgt also im optimierten Aufbau 50%, im Aufbau mit SMD-Technik ca. 6% und im bedrahteten Aufbau auf einer gedruckten Schaltung beträgt der Wirkungsgrad nur 2%.

Fig. 5 zeigt den optimierten Aufbau der Leuchtdiodenlichtquelle 40. Die Leuchtdiodenlichtquelle 40 umfasst die Leuchtdiode 41, das Schaltelement 42 und das Energiespeicherelement 43. Das Schaltelement 42 ist in einer Reihenschaltung mit der Leuchtdiode 41 gekoppelt. Das Energiespeicherelement 43 ist parallel zu der Reihenschaltung von Leuchtdiode 41 und Schaltelement 42 gekoppelt. Wenn das Schaltelement 42 durchschaltet, wird ein Strompfad durch die Leuchtdiode 41 geschaltet, welcher von einem ersten Anschluss 47 des Energiespeicherelements 43 über einen ersten Leitungsabschnitt 50 zu dem Schaltelement 42 verläuft und von dort über einen zweiten Leitungsabschnitt 51 zu der Leuchtdiode 41 verläuft. Über einen dritten Leitungsabschnitt 52 verläuft der Strompfad zu dem zweiten Anschluss 48 des Energiespeicherelements 43. Wie in der Fig. 5 gezeigt ist, sind die Elemente 41, 42 und 43 in einem gemeinsamen Gehäuse 54 angeordnet. Anders ausgedrückt sind die Halbleiterelemente 41 und 42 sowie der Kondensator 43 ohne eigene Gehäuse in dem gemeinsamen Gehäuse 54 untergebracht. Dadurch können die Längen der Verbindungen 50 bis 52 entsprechend kurz ausgestaltet werden. Beispielsweise kann der gesamte Strompfad, welcher das Energiespeicherelement 43, die Leuchtdiode 41 und das Schaltelement 42 verbindet, eine Länge von weniger als 12 mm haben. Vorzugsweise ist die Länge des Strompfads kürzer als 9 mm. Jede der Verbindungen 50, 51 und 52 kann beispielsweise 1 bis 3 mm betragen. Die Verbindungen 50 bis 52 können zusammen mit den Anschlüssen 44 bis 46 einen sogenannten Leadframe bilden, welcher einerseits die Außenanschlüsse 44 bis 46 der Leuchtdiodenlichtquelle 40 und andererseits die Verbindungen 50 bis 52 zur Kopplung der Elemente 41 bis 43 bereitstellt. Aufgrund der kurzen Verbindungslängen der Verbindungen 50 bis 52 kann ein hoher Wirkungsgrad der Leuchtdiodelichtquelle 40 erreicht werden. In dem Gehäuse 54 können mehrere Leuchtdiodenlichtquellen realisiert werden, indem entsprechend mehrere Leuchtdioden 41, Schaltelemente 42 und Energiespeicher 43 auf einem gemeinsamen Leadframe in dem gemeinsamen Gehäuse 54 angeordnet werden. Die Leuchtdiode 41 kann Licht mit einer Wellenlänge von weniger als 760 nm, vorzugsweise weniger als 500 nm erzeugen, also insbesondere blaues Licht. Darüber hinaus kann in dem Gehäuse 54 eine Phosphorbeschichtung vorgesehen sein, welche ultraviolettes Licht oder blaues Licht, welches von der Leuchtdiode 41 erzeugt wird, in andersfarbiges Licht umsetzt. Die Leuchtdiodenlichtquelle 40 oder mehrere der Leuchtdiodenlichtquellen 40 können in einer Beleuchtungseinrichtung 11 des Fahrzeugs 10 verwendet werden, um beispielsweise eine Umgebung des Fahrzeugs 10 auszuleuchten oder ein Lichtsignal, wie zum Beispiel ein Blinklicht oder ein Bremslicht, zu erzeugen.

Bei den zuvor beschriebenen Verfahren und Vorrichtungen wurden vorhandene Beleuchtungseinrichtungen des Fahrzeugs, wie zum Beispiel Scheinwerfer eines Abblendlichts, Nebelscheinwerfer, Blinkleuchten, Bremsleuchten oder Rückfahrscheinwerfer, verwendet, um ein moduliertes Lichtsignal zu erzeugen, welches von einem Objekt in der Umgebung des Fahrzeugs reflektiert wird und von einem Sensor am Fahrzeug empfangen wird. Aus dem Empfangssignal des Sensors und der Kenntnis über das modulierte Signal, mit welchem die Beleuchtungseinrichtung des Fahrzeugs angesteuert wurde, kann eine Entfernung oder eine Geschwindigkeit des Objekts bestimmt werden. Da die primäre Funktion der Beleuchtungseinrichtung ein Ausleuchten einer Umgebung des Fahrzeugs oder ein Ausgeben eines Lichtsignals, wie zum Beispiel eines Blinksignals oder eines Bremssignals, ist, wird nachfolgend ein Verfahren 60 beschrieben werden, welches gleichzeitig eine Bestimmung einer Entfernungsinformation sicherstellt. Dazu wird im Schritt 61 zunächst ein Betriebszustand des Fahrzeugs erfasst. Der Betriebszustand des Fahrzeugs kann beispielsweise einen Soll-Zustand für die Beleuchtungseinrichtung des Fahrzeugs sein, welcher anzeigt, ob die Beleuchtungseinrichtung eingeschaltet oder ausgeschaltet sein soll. Das Erfassen des Betriebszustands kann ferner ein Bestimmen einer Umgebungshelligkeit in einer Umgebung oder innerhalb des Fahrzeugs umfassen oder ein Bestimmen eines Entfernungsmessbereichs, für welchen die Entfernungsinformation zu bestimmen ist. Abhängig von dem so bestimmten Betriebszustand wird im Schritt 62 ein moduliertes Sendesignal erzeugt. Beispielsweise kann ein erstes moduliertes Sendesignal erzeugt werden, wenn der Soll-Zustand für die Beleuchtungseinrichtung anzeigt, dass die Beleuchtungseinrichtung eingeschaltet sein soll. Weiterhin kann ein zweites moduliertes Sendesignal erzeugt werden, welches invertiert zu dem ersten modulierten Sendesignal ist, wenn der Soll-Zustand anzeigt, dass die Beleuchtungseinrichtung ausgeschaltet sein soll. So kann beispielsweise bei ausgeschalteter Beleuchtungseinrichtung ein moduliertes Sendesignal erzeugt werden, welches kurze Lichtimpulse umfasst, deren Energie nicht ausreicht, um von einem Beobachter gesehen zu werden. Umgekehrt kann, wenn die Beleuchtungseinrichtung eingeschaltet sein soll, ein moduliertes Sendesignal erzeugt werden, welches die Beleuchtungseinrichtung für kurze Impulse ausschaltet, welche so kurz sind, dass sie von einem Betrachter nicht bemerkt werden und somit die Beleuchtungseinrichtung als durchgehend eingeschaltet erscheint. Im Schritt 63 wird die Beleuchtungseinrichtung 11 des Fahrzeugs 10 mit dem erzeugten Sendesignal angesteuert. Im Schritt 64 wird reflektiertes Licht 16 empfangen, welches als Licht 15 von der Beleuchtungsvorrichtung 11 abgegeben wurde und von dem Objekt 17 reflektiert wurde. In Abhängigkeit von dem empfangenen Licht 16 wird im Schritt 65 ein Empfangssignal erzeugt. Im Schritt 66 wird das Empfangssignal mit dem Sendesignal kombiniert und im Schritt 67 die Entfernung des Objekts 17 aus der Kombination bestimmt.

Die Lichtmenge, welche von einem Betrachter nicht gesehen werden kann, hängt unter anderem von einer gesamten Helligkeit der Umgebung des Fahrzeugs und einem Kontrast in der Sendeebene ab. Tagsüber können erheblich größere Lichtmengen von der Beleuchtungseinrichtung abgestrahlt werden, welche von einem Beobachter nicht bemerkt werden, als nachts. Typischerweise ist ein Signal zu Rausch Verhältnis tagsüber durch das Störlicht der Sonne erheblich schlechter, sodass tagsüber höhere Sendeleistungen als nachts notwendig sind. Tagsüber können beispielsweise Leistungen von bis zu 2 mJ abgestrahlt werden, welche von einem Beobachter nicht bemerkt werden. Bei dem Verfahren kann daher eine Durchschnittsleistung des modulierten Signals in Abhängigkeit von dem Betriebszustand, insbesondere eine Umgebungshelligkeit, eingestellt werden. Weiterhin kann die Sendeenergie in Abhängigkeit von einem Entfernungsmessbereich, für welchen die Entfernungsmessinformation zu bestimmen ist, eingestellt werden. Diese hängt beispielsweise von dem Bedarf einer Applikation ab, welche die Entfernungsinformation verwendet. Ein Fahrerassistenzsystem für eine Abstandsregelung oder ein Kollisionsvermeidungssystem kann einen größeren Entfernungsmessbereich erfordern als ein Einparksystem.

Das modulierte Sendesignal kann beispielsweise ein pulsmoduliertes Signal umfassen. Das pulsmodulierte Signal kann eine Pulsdauer im Bereich von 1 bis 500 ns, vorzugsweise 10 bis 100 ns aufweisen. Eine Frequenz, mit welcher die Pulse des pulsmodulierten Signals wiederholt werden, kann im Bereich von 1 bis 1.000 Hz, vorzugsweise 10 bis 100 Hz, betragen.

Die Beleuchtungseinrichtung des Fahrzeugs kann beispielsweise die zuvor beschriebene Leuchtdiodenlichtquelle oder mehrere Leuchtdioden umfassen. Bei weißen Leuchtdioden kann der primäre blaue Lichtanteil als Modulationsträger genutzt werden. Dieser wird hochfrequent mit dem modulierten Sendesignal moduliert und bleibt im Spektrum der weißen Leuchtdiode bestehen. Der Phosphor der Leuchtdiode kann den schnellen Modulationen nicht folgen, da er im Allgemeinen träge ist. So entsteht ein für die menschliche Wahrnehmung weißes gleichmäßig leuchtendes Licht, während dessen Blauanteil die gewünschte Modulation aufweist.

In Abhängigkeit von dem Betriebszustand des Fahrzeugs und dem modulierten Sendesignal kann eine weitere Beleuchtungseinrichtung des Fahrzeugs angesteuert werden. Das Fahrzeug 10 fährt beispielsweise auf einer Landstraße und ein Fahrerassistenzsystem, wie z.B. eine adaptive Geschwindigkeitsregelung, wird eingeschaltet. Die Scheinwerfer des Fahrzeugs sind ausgeschaltet. Daher wird ein moduliertes Sendesignal erzeugt, welches kurzzeitige Lichtimpulse umfasst. Damit kann eine Entfernungsinformation zu einem Objekt vor dem Fahrzeug für das adaptive Geschwindigkeitsregelungssystem bereit gestellt werden. Ein Einschalten eines Fahrlichts des Fahrzeugs ist somit nicht notwendig, d.h. es muss nicht die gesamte Energie für alle Leuchtdiodenleuchtmittel der Scheinwerfer des Fahrzeugs zur Verfügung gestellt werden, was insbesondere für ein Elektrofahrzeug von Vorteil sein kann. Insbesondere das adaptive Geschwindigkeitsregelungssystem benötigt eine große Messreichweite. Wenn, wie zuvor beschrieben, am Tag die Scheinwerfer ausgeschaltet sind, kann beispielsweise das Fernlicht mit hoher Energie genutzt werden, um Messimpulse auszusenden, die eine hohe Reichweite haben. Fährt das Fahrzeug hingegen bei Dunkelheit, wird das Fernlicht durch kurzzeitiges Absenken der Helligkeit moduliert, um die große Messreichweite zu ermöglichen. Wenn bei Dunkelheit ein Fahrzeug entgegenkommt, ist ein Betrieb des Fernlichts jedoch nicht mehr möglich, um den Fahrer des entgegenkommenden Fahrzeugs nicht zu blenden. In diesem Fall können Leuchtdioden des Abblendlichts durch kurzzeitiges Absenken der Helligkeit moduliert werden, um eine Entfernungsinformation zu bestimmen. Gleichzeitig können Leuchtdioden des Fernlichts mit kurzen Pulsen moduliert werden, um eine Entfernungsinformation zu bestimmen, ohne den Gegenverkehr zu blenden. Anders ausgedrückt werden einige LEDs kurzzeitig eingeschaltet (in diesem Fall LEDs des ausgeschalteten Fernlichts) und andere Leuchtdioden kurzzeitig ausgeschaltet (in diesem Fall Leuchtdioden des Abblendlichts). Dadurch kann eine große Messreichweite ermöglicht werden, ohne dass die Leuchtdioden für das Fernlicht das entgegenkommende Fahrzeug blenden oder stören.

Bei den zuvor beschriebenen Verfahren und Vorrichtungen wurde eine Entfernung des Objekts 17 oder eine Geschwindigkeit des Objekts 17 unter Verwendung einer am Fahrzeug 10 ohnehin vorhandenen Beleuchtungseinrichtung 11 wie z.B. einem Abblendlicht, einem Tagfahrlicht oder einem Fernlicht des Fahrzeugs 10, bestimmt. Nachfolgend wird beschrieben werden, wie unter Verwendung der zuvor beschriebenen Verfahren zusätzlich eine Positionsinformation, also zusätzlich eine Richtungsinformation, des Objekts 17 in Bezug auf das Fahrzeug 10 bestimmt werden kann.

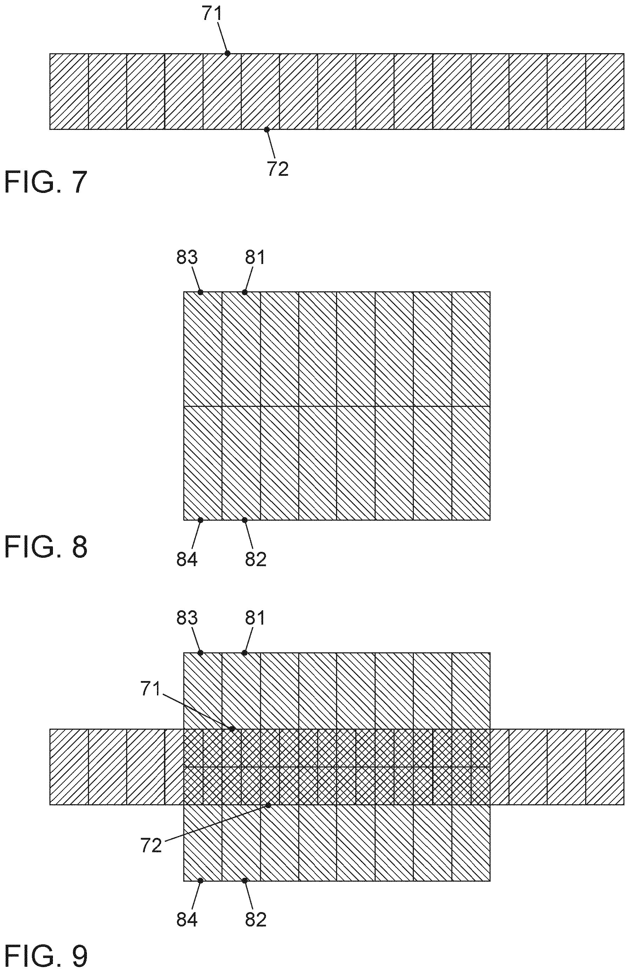

Gemäß einer Ausführungsform umfasst der Sensor 12 des Fahrzeugs 10 mindestens zwei erste Sensoren zum Empfangen von Licht, welches von der Lichtquelle 11 des Fahrzeugs erzeugt wurde und von einer Szene, welche das Objekt 17 umfasst, in der Umgebung des Fahrzeugs reflektiert wurde. Jedem der mindestens zwei ersten Sensoren ist ein jeweiliger erster Erfassungsbereich der Szene zugeordnet. Die ersten Erfassungsbereiche sind in einer Reihe in einer ersten Richtung angeordnet. Fig. 7 zeigt 15 erste Erfassungsbereiche, welche 15 ersten Sensoren zugeordnet sind. Die 15 ersten Erfassungsbereiche sind in einer horizontalen Richtung angeordnet. Zwei der 15 ersten Erfassungsbereiche sind mit den Bezugszeichen 71 und 72 gekennzeichnet. Der Sensor 12 umfasst weiterhin mindestens zwei zweite Sensoren zum Empfangen von von der Szene reflektiertem Licht, wobei jedem der mindestens zwei zweiten Sensoren ein jeweiliger zweiter Erfassungsbereich der Szene zugeordnet ist. Die zweiten Erfassungsbereiche sind in einer zweiten Richtung in einer Reihe angeordnet. Die zweite Richtung ist unterschiedlich zu der ersten Richtung. In Fig. 8 sind zwei zweite Erfassungsbereiche 81 und 82 dargestellt, welche in einer vertikalen Richtung in einer Reihe angeordnet sind. Darüber hinaus sind weitere Erfassungsbereiche in Fig. 8 dargestellt, welche ebenfalls paarweise in der vertikalen Richtung in einer Reihe angeordnet sind, beispielsweise die zwei dritten Erfassungsbereiche 83 und 84. Die Verarbeitungseinheit 13 ist ausgestaltet, eine Position des Objekts 17 in der Umgebung des Fahrzeugs 10 in Abhängigkeit von Signalen der ersten und zweiten Sensoren zu bestimmen. Einer der ersten Erfassungsbereiche, beispielsweise der Bereich 71, ist einem der zweiten Erfassungsbereiche, beispielsweise dem Bereich 81, teilweise überlagert. Der eine der ersten Erfassungsbereiche, also der Bereich 71, kann zusätzlich teilweise einem weiteren der zweiten Erfassungsbereiche, beispielsweise dem Bereich 82, überlagert sein, wie es in Fig. 9 dargestellt ist. Die dritten Erfassungsbereiche 83, 84, welche von entsprechenden dritten Sensoren überwacht werden, können derart angeordnet sein, dass einer der ersten Erfassungsbereiche, beispielsweise der Erfassungsbereich 71, einem der zweiten Erfassungsbereiche, beispielsweise dem Bereich 81, einem weiteren der zweiten Erfassungsbereiche, beispielsweise dem Bereich 82, einem der dritten Erfassungsbereiche, beispielsweise dem Bereich 83, und einem weiteren der dritten Erfassungsbereiche, beispielsweise dem Bereich 84, teilweise überlagert ist.

Die Positionsbestimmung des Objekts 17 mit Hilfe der überlagerten Erfassungsbereiche, wie sie zuvor beschrieben wurden, wird nachfolgend im Detail beschrieben werden. Im Vergleich dazu sein an dieser Stelle angemerkt, dass, bei nicht überlagerten Erfassungsbereichen, mit beispielsweise fünf Erfassungsbereichen lediglich fünf unterschiedliche Positionsbereiche für das Objekt 17 unterschieden werden können. Durch die Überlagerung der Erfassungsbereiche, wie sie in Fig. 9 gezeigt ist, können jedoch mit den Erfassungsbereichen 71 und 81-84 acht unterschiedliche Positionsbereiche für das Objekt 17 unterschieden werden. Wenn nur der Sensor, welcher einem der Erfassungsbereiche 81-84 zugeordnet ist, das Objekt 17 erfasst, befindet sich das Objekt 17 in einem Bereich, welcher dem entsprechenden Sensor zugeordnet ist und welcher den Bereich, der dem Sensor 71 zugeordnet ist, nicht überdeckt. Somit können bereits vier unterschiedliche Bereiche für das Objekt 17 unterschieden werden. Wenn das Objekt 17 in einem der Bereiche 81-84 und zusätzlich in dem Bereich 71 detektiert wird, muss sich das Objekt 17 in einem der vier Überlagerungsbereiche befinden, welche sich durch die Überlagerung des Bereichs 81 mit dem Bereich 71, des Bereichs 82 mit dem Bereich 71, des Bereichs 83 mit dem Bereich 71 oder des Bereichs 84 mit dem Bereich 71 ergeben. Dadurch können vier weitere Positionsbereiche für das Objekt 17 unterschieden werden. Werden die Sensoren derart angeordnet, dass die in Fig. 7 und 8 gezeigten Erfassungsbereiche getrennt überwacht werden können, kann durch die in Fig. 9 gezeigte Überlagerung erreicht werden, dass mit den erforderlichen 15 ersten Sensoren für die Bereiche der Fig. 7 und den 16 Sensoren für die Bereiche der Fig. 8 insgesamt 56 unterschiedliche Bereiche realisiert werden, in denen das Objekt 17 getrennt detektiert werden kann.

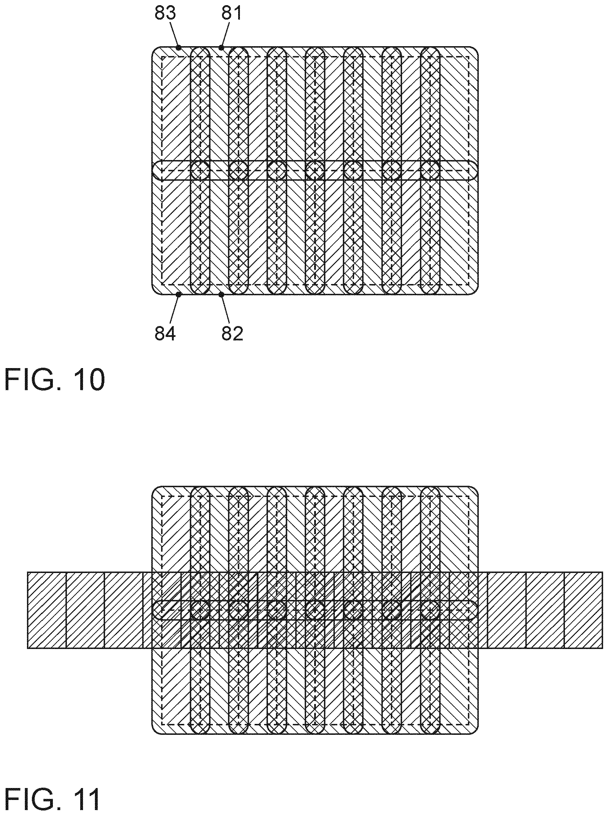

Die zweiten Erfassungsbereiche können ihrerseits zusätzlich in der vertikalen Richtung überlappend sein und zusätzlich in der horizontalen Richtung überlappend zu weiteren Erfassungsbereichen, beispielsweise den dritten Überlappungsbereichen 83, 84 sein. Dies kann beispielsweise durch eine sogenannte "Unschärfe" der zugeordneten Sensoren erreicht werden. Fig. 10 zeigt die zuvor beschriebene Überlappung der zweiten, dritten und weiteren Erfassungsbereiche. In Kombination mit den ersten Erfassungsbereichen der Fig. 7 kann somit eine Vielzahl unterschiedlicher Bereiche zur Positionsbestimmung des Objekts 17 bereitgestellt werden, wie in Fig. 11 dargestellt ist. Durch Überlappen der ersten Erfassungsbereiche untereinander kann die Auflösung der Positionsbestimmung des Objekts 17 weiter erhöht werden, was jedoch aus Gründen der Übersichtlichkeit in Fig. 11 nicht dargestellt ist. Die Fig. 9 und 11 zeigen weiterhin, dass insbesondere im Zentrum, d.h. in dem Bereich, in welchem sich die horizontal angeordneten und die vertikal angeordneten Erfassungsbereiche überschneiden, eine besonders hohe Auflösung zur Positionsbestimmung des Objekts 17 erreicht werden kann. Dies kann für viele Fahrerassistenzsysteme eines Fahrzeugs vorteilhaft genutzt werden, da insbesondere in der Geradeausrichtung des Fahrzeugs eine hohe Auflösung vorteilhaft ist, während eine geringere Auflösung im Randbereich im Allgemeinen toleriert werden kann.

Die Erfassungsbereiche der Fig. 7-11 liegen senkrecht zur Messrichtung, d.h., senkrecht zum Pfeil 16 der Fig. 1.

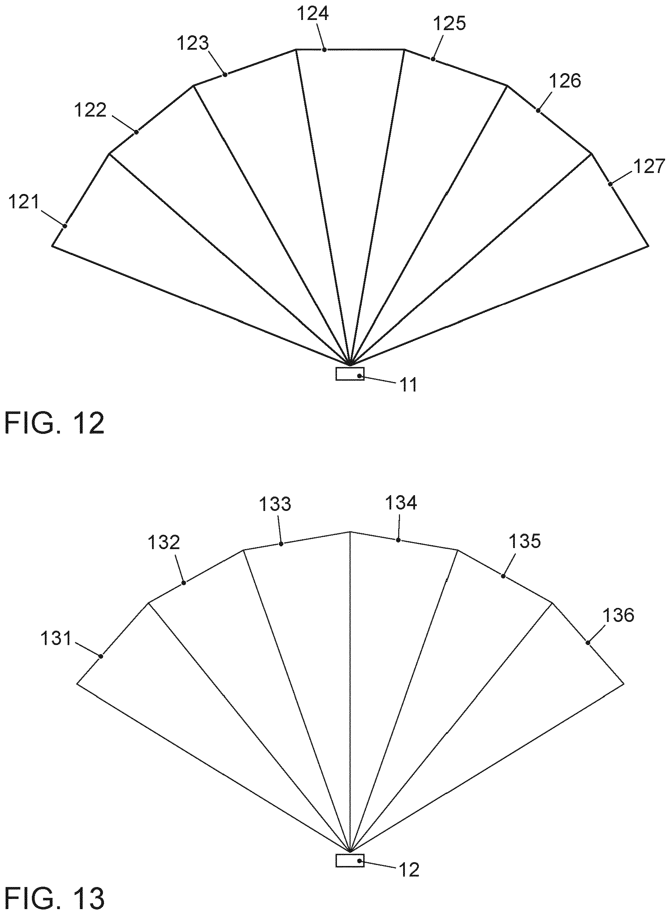

In Verbindung mit den Fig. 12-14 wird eine weitere Möglichkeit dargestellt, eine Positionsinformation des Objekts 17 in Bezug auf das Fahrzeug 10 zu bestimmen.

Die Beleuchtungseinrichtung 11 des Fahrzeugs 10 weist mindestens eine erste Lichtquelle und eine zweite Lichtquelle auf. Die erste und zweite Lichtquelle sind unabhängig voneinander ansteuerbar. Die erste Lichtquelle ist zur Beleuchtung eines ersten Beleuchtungsbereichs einer Szene in einer Umgebung oder innerhalb des Fahrzeugs 10 ausgestaltet. Die zweite Lichtquelle ist zur Beleuchtung eines zweiten Beleuchtungsbereichs der Szene ausgestaltet. Der erste Beleuchtungsbereich ist unterschiedlich zu dem zweiten Beleuchtungsbereich. In Fig. 12 sind mehrere Beleuchtungsbereiche 121-127 dargestellt. Beispielsweise kann der erste Beleuchtungsbereich der Bereich 121 sein und der zweite Beleuchtungsbereich der Bereich 122. Der Sensor 12 umfasst mindestens einen ersten Sensor und einen zweiten Sensor zum Empfangen von von der Szene reflektiertem Licht. Dabei ist dem ersten Sensor ein erster Erfassungsbereich der Szene zugeordnet und dem zweiten Sensor ein zweiter Erfassungsbereich der Szene zugeordnet. Der erste Erfassungsbereich ist unterschiedlich zu dem zweiten Erfassungsbereich. In Fig. 13 sind sechs Erfassungsbereiche 131-136 dargestellt. Der erste Erfassungsbereich kann beispielsweise der Bereich 131 und der zweite Erfassungsbereich kann beispielsweise der Bereich 132 sein. Die Verarbeitungseinheit 13 steuert die erste und zweite Lichtquelle und gegebenenfalls weitere Lichtquellen zur Erzeugung der Beleuchtungsbereiche 123-127 an und bestimmt eine Position des Objekts 17 in der Umgebung des Fahrzeugs 10 in Abhängigkeit von Signalen der ersten und zweiten Sensoren und gegebenenfalls weiterer Sensoren, welche den Erfassungsbereichen 133-136 zugeordnet sind, und in Abhängigkeit von der Ansteuerung der Lichtquellen. Die Bereiche 121-127 und 131-136 liegen beispielsweise in der Ebene der Pfeile 15 und 16 der Fig. 1.

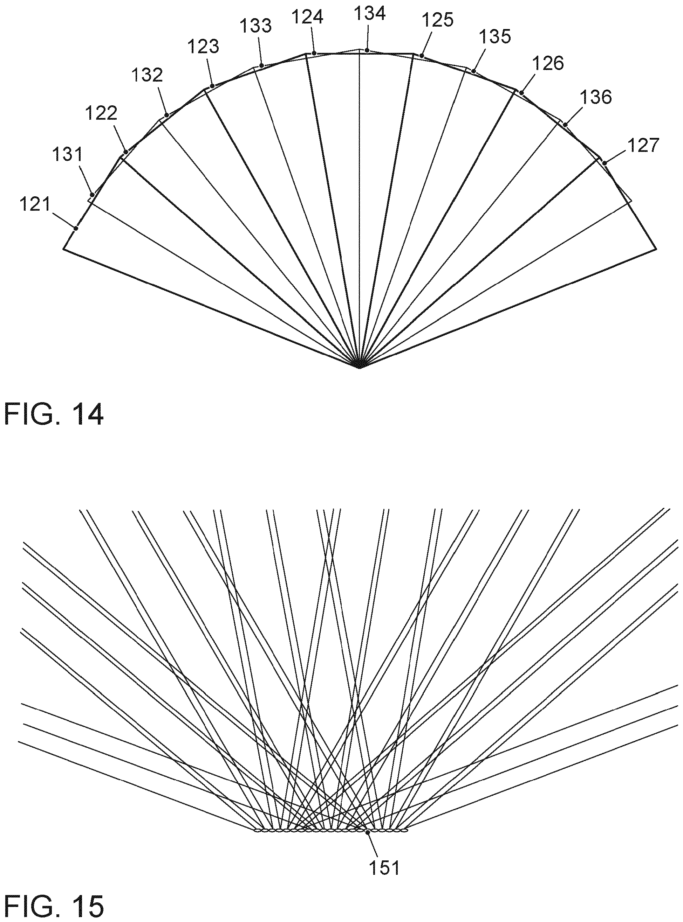

Die Erfassungsbereiche können beispielsweise zu den Beleuchtungsbereichen ausgerichtet angeordnet sein, d.h. der Erfassungsbereich 131 entspricht im Wesentlichen dem Beleuchtungsbereich 121, der Erfassungsbereich 132 entspricht im Wesentlichen dem Beleuchtungsbereich 122 usw. Jeder der Erfassungsbereiche kann einen vorbestimmten Winkelbereich aufweisen, beispielsweise 10° oder, wie in den Figuren 12 und 13 gezeigt, 20°. Die so gebildeten Segmente können in einem sogenannten Zeitmultiplexverfahren nacheinander abgetastet werden. Da mit den zuvor beschriebenen Entfernungsmessverfahren, insbesondere mit dem frequenzmodulierten Dauerstrichverfahren oder zufälligen Frequenzmodulationsverfahren, Entfernungsmessungen innerhalb eines Segments innerhalb sehr kurzer Zeit, beispielsweise innerhalb von 50 μsec durchgeführt werden können, kann der gesamte Winkelbereich, welcher von den Segmenten überdeckt wird, in einer sehr kurzen Zeit abgetastet werden. Wenn beispielsweise ein Winkelbereich von 120° in 10°-Segmenten abgetastet werden soll, kann der gesamte Winkelbereich bei einer Messzeit von 50 μsec pro Segment in 600 μsec abgetastet werden. Selbst bei einer längeren Messzeit von 500 μsec kann der gesamte Winkelbereich von 120° in 6 ms abgetastet werden. Typische Anwendungen von Fahrerassistenzsystemen benötigen Messzeiten im Bereich von 30 ms-50 ms, so dass eine ausreichend schnelle Abtastung möglich ist. Die Auflösung der Abtastung kann verbessert werden, indem nicht jedes Winkelsegment mit je einem entsprechenden Sender und Empfänger ausgestattet wird, sonder indem Segmente verwendet werden, welche sich jeweils zur Hälfte überlappen. Fig. 14 zeigt eine derartige Überlappung der Beleuchtungsbereiche 121-127 mit den Erfassungsbereichen 131-136. Sowohl die Beleuchtungsbereiche als auch die Erfassungsbereiche umfassen jeweils einen Winkelbereich von 20°. Durch die versetzte Überlappung der Beleuchtungsbereiche 121-127 mit den Erfassungsbereichen 131-136 ergeben sich zwölf 10°-Segmente, welche mit sieben Lichtquellen und sechs Sensoren abgetastet werden können. die Segmente können nebeneinander angeordnet sein, da mit einem Zeitmultiplexverfahren gearbeitet wird und somit Übersprecher von einem Segment zu einem Nachbarsegment nicht relevant sind. Zu einem Zeitpunkt wird immer nur ein Paar aus Sender und Empfänger betrieben, so dass eindeutig feststellbar ist, in welchem Segment ein Signal auftritt. Anders ausgedrückt überdeckt der erste Erfassungsbereich 131 einen Teilbereich des ersten Beleuchtungsbereichs 121 und einen Teilbereich des zweiten Beleuchtungsbereichs 122. Der zweite Erfassungsbereich 132 umfasst einen weiteren Teilbereich des zweiten Beleuchtungsbereichs 122. Dabei ist der zweite Erfassungsbereich 132 getrennt von dem ersten Beleuchtungsbereich 121.

Aus der zuvor in Verbindung mit den Figuren 12-14 beschriebenen Anordnung von Beleuchtungsbereichen und Erfassungsbereichen kann zusätzlich eine Information für eine Sichtweitenabschätzung gewonnen werden, wenn Erfassungsbereiche, welche einem Beleuchtungsbereich gar nicht zugeordnet sind, gleichzeitig mit ausgewertet werden. Beispielsweise werden für eine Entfernungsmessung die Lichtquelle für den Beleuchtungsbereich 121 und der Sensor für den Erfassungsbereich 131 betrieben. Es ergibt sich ein Messsegment in dem Überlagerungsbereich zwischen dem Beleuchtungsbereich 121 und dem Messbereich 131. Gleichzeitig oder auch in einem Zeitmultiplexverfahren wird ein Sensor abgefragt, welcher dem Erfassungsbereich 136 zugeordnet ist. Wenn auch dieser Sensor ein Entfernungssignal aufgrund des für den Beleuchtungsbereich 121 ausgegebenen Lichts meldet, kann dies nur aus sekundärem Streulicht entstehen. Wenn wie hier bei weit entfernten Beleuchtungsbereichen und Erfassungsbereichen Signale auftreten, handelt es sich um beispielsweise sehr starken Nebel. Sind die Segmente näher zusammen, wenn also beispielsweise der Erfassungsbereich 133 ein Entfernungssignal liefert, so tritt schon bei geringeren Partikeldichten eine messbare Sekundärstreuung auf. Durch Auswertung von unterschiedlich entfernten Bereichen kann der Nebel sehr gut abgestuft bewertet werden. Daraus kann eine aktuelle Sichtweite abgeschätzt werden.

Zur segmentierten Ausleuchtung der Umgebung des Fahrzeugs 10 sind, wie zuvor beschrieben wurde, mehrere Lichtquellen erforderlich. Dazu können beispielsweise mehrere Leuchtdioden von beispielsweise einem Abblendlicht oder insbesondere von einem Tagfahrlicht, welches eine linienartige Struktur aufweist, verwendet werden. Um insbesondere bei einem linienförmigen Tagfahrlicht ein gleichmäßiges Erscheinungsbild zu erreichen, können beispielsweise in dem Tagfahrlicht beabstandet angeordnete Leuchtdioden in Gruppen zusammengeschaltet werden und einen jeweiligen Beleuchtungsbereich ausleuchten. Dazwischen liegende Leuchtdioden können weitere Beleuchtungsbereiche ausleuchten. Anders ausgedrückt kann beispielsweise die erste Lichtquelle, welche zur Erzeugung des Beleuchtungsbereichs 121 verwendet wird, mindestens eine erste Leuchtdiode und eine zweite Leuchtdiode umfassen. Eine zweite Lichtquelle, welche den Beleuchtungsbereich 122 ausleuchtet, kann ebenfalls mindestens eine Leuchtdiode oder mehrere Leuchtdioden umfassen. Die erste und die zweite Leuchtdiode der ersten Lichtquelle und die Leuchtdiode der zweiten Lichtquelle werden in einer Reihe angeordnet, wobei die Leuchtdiode der zweiten Lichtquelle wird zwischen der ersten und zweiten Leuchtdiode der ersten Lichtquelle angeordnet wird. Da die Helligkeit der Leuchtdioden bei der Entfernungsmessung variieren kann, kann durch diese versetzte Anordnung erreicht werden, dass diese Helligkeitsunterschiede von einem Betrachter nicht wahrgenommen werden. Alternativ kann damit aber auch ein gestalterisch interessanter Effekt geschaffen werden, wenn die Helligkeitsunterschiede für einen Betrachter sichtbar sind.

Fig. 15 zeigt ein Nahfeld von Beleuchtungsbereichen aufgrund einer versetzten Anordnung von Leuchtdioden. Ein Leuchtband 151 umfasst 21 Leuchtdioden. Das Leuchtband 151 kann beispielsweise ein Leuchtband eines Tagfahrlichts sein und eine Länge von beispielsweise 42 cm aufweisen. Mit dem Leuchtband 151 werden sieben Beleuchtungsbereiche oder Segmente mit einem Winkel von jeweils 20° ausgeleuchtet. Jedes Segment wird von jeweils drei Leuchtdioden im Abstand von 14 cm erzeugt. In Fig. 15 sind die von den einzelnen Leuchtdioden ausleuchtbaren Segmente dargestellt. Das Fernfeld der durch die Leuchtdioden des Leuchtbandes 151 erzeugten Segmente ist in Fig. 16 dargestellt. Hier sind deutlich die näherungsweise 20° umfassenden Beleuchtungsbereiche 121-127 erkennbar.

Verschiedene Assistenzsysteme eines Fahrzeugs können eine Bildinformation der Umgebung des Fahrzeugs benötigen, welche eine hohe Auflösung einer Abbildung einer Szene vor dem Fahrzeug aus Sicht des Fahrzeugs bereitstellt, wobei jedem Bereich oder Bildpunkt der Bildinformation ein entsprechender Entfernungswert zu einem Gegenstand in diesem Bereich zugeordnet ist. Diese Bildinformation kann erforderlich sein, um beispielsweise Hindernisse oberhalb oder unterhalb eines bestimmten Bereichs detektieren zu können, wie z.B. auf der Fahrbahn befindliche Hindernisse wie Schwellen, die nicht überfahren werden können. Fig. 17 zeigt ein Verfahren 170 zum Bestimmen derartiger Entfernungsinformationen. Im Schritt 171 wird die Szene in der Umgebung des Fahrzeugs beleuchtet. Das Verfahren 170 ist nicht nur außerhalb des Fahrzeugs einsetzbar, sondern auch innerhalb des Fahrzeugs, um beispielsweise Gesten eines Fahrers zu erkennen. Das von der Szene reflektierte Licht wird mit dem Sensor 12 des Fahrzeugs 10 empfangen. Im Schritt 172 werden mehrere erste Entfernungshistogramme in Abhängigkeit von dem empfangenen Licht bestimmt. Einem jeweiligen ersten Entfernungshistogramm der mehreren ersten Entfernungshistogramme ist ein jeweiliger erster streifenförmiger Bereich der Szene zugeordnet. Das erste Entfernungshistogramm umfasst eine Stärke von Reflexionen in einem Entfernungsbereich durch Objekte in dem zugeordneten ersten streifenförmigen Bereich. Im Schritt 173 werden mehrere zweite Entfernungshistogramme in Abhängigkeit von dem empfangenen Licht bestimmt. Einem jeweiligen zweiten Entfernungshistogramm der mehreren zweiten Entfernungshistogramme ist ein jeweiliger zweiter streifenförmiger Bereich der Szene zugeordnet. Das zweite Entfernungshistogramm umfasst eine Stärke von Reflexionen in einem Entfernungsbereich durch Objekte in dem zugeordneten zweiten streifenförmigen Bereich. Im Schritt 174 wird in Abhängigkeit von den mehreren ersten Entfernungshistogrammen und den mehreren zweiten Entfernungshistogrammen für einen Bereich der Szene eine Entfernung bestimmt. Der Bereich der Szene umfasst einen Kreuzungsbereich von einem der ersten streifenförmigen Bereiche mit einem der zweiten streifenförmigen Bereiche. Die ersten streifenförmigen Bereiche sind vorzugsweise entlang ihrer Längsrichtung parallel zueinander und die zweiten streifenförmigen Bereiche sind vorzugsweise entlang ihrer Längsrichtung parallel zueinander. Die Längsrichtung der ersten streifenförmigen Bereiche ist dabei vorzugsweise senkrecht zur Längsrichtung der zweiten streifenförmigen Bereiche. Die ersten streifenförmigen Bereiche können Zeilen der Szene vor dem Fahrzeug oder innerhalb des Fahrzeugs umfassen und die zweiten streifenförmigen Bereiche können Spalten der Szene umfassen. Zum Bestimmen der mehreren ersten Entfernungshistogramme und der mehreren zweiten Entfernungshistogramme kann der Sensor 12 eine Empfängermatrix umfassen, bei welcher Zeilen und Spalten wahlweise zusammengeschaltet werden können, so dass ein Empfangssignal entweder aus der Summe aller Elemente in einer Spalte oder aus der Summe aller Elemente einer Zeile entsteht. Dann können alle Zeilen und Spalten einzeln gemessen werden. Die Entfernungsmessungen können beispielsweise mit einem der zuvor beschriebenen Verfahren durchgeführt werden, indem die Lichtquelle des Fahrzeugs entsprechend moduliert wird und das Empfangssignal aus einer der Zeilen oder Spalten mit dem Sendesignal für die Beleuchtungseinrichtung 11 korreliert oder gemischt wird. Die Empfängermatrix kann beispielsweise 300 Zeilen und 700 Spalten aufweisen, also in Summe 1000 Zeilen und Spalten. Bei einer Messzeit pro Zeile oder Spalte von beispielsweise 50 μsec können diese 1000 Messungen in 50 ms erfolgen, wobei gemäß nachstehenden Ausführungen vorliegend eine zumindest teilweise und bevorzugt vollständig zeitgleiche Messung sämtlicher Zeilen und Spalten vorgesehen ist.

Pro Zeile bzw. Spalte steht nun ein entfernungsaufgelöstes Echogramm, ein sogenanntes Entfernungshistogramm, zur Verfügung. Dies kann mit einem Verfahren ähnlich wie bei einem Computertomographen zu einem pixelaufgelösten Bild verarbeitet werden. Um den Verarbeitungsaufwand zu verringern, kann mit dem gleichen Verfahren ein bestimmter interessierender Bereich ausgewählt werden. Für diesen Bereich werden die entsprechenden Empfangselemente der Empfängermatrix zusammengeschaltet und nur dieser Bereich beobachtet und ausgewertet.

Die Umschaltung zwischen unterschiedlichen auszuwertenden Bereichen ist dynamisch möglich und kann so an verschiedene Fahrsituationen angepasst werden.

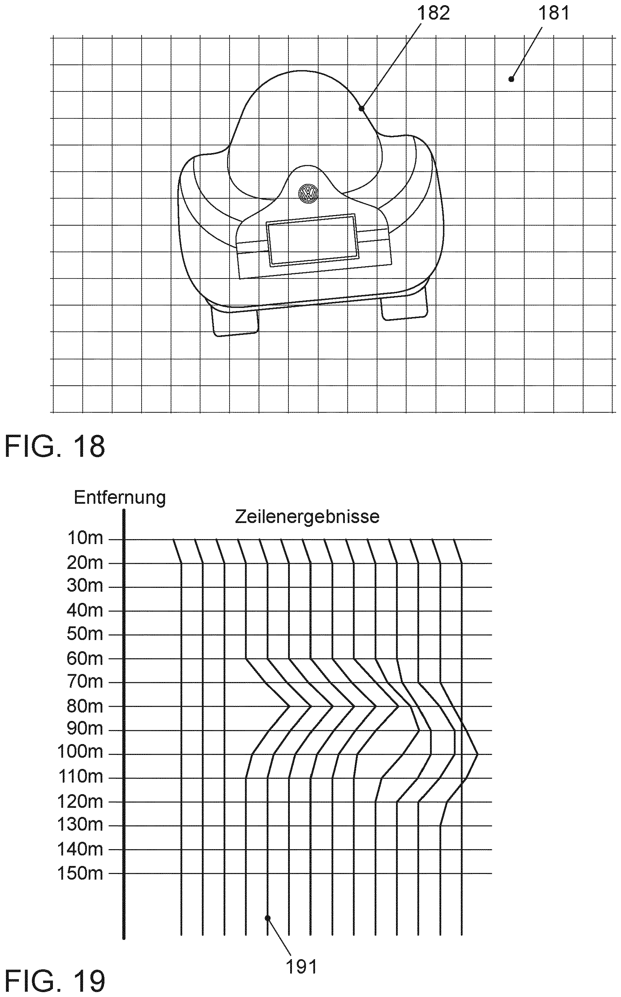

Das zuvor beschriebene Verfahren wird nachfolgend unter Bezugnahme auf die Fig. 18 bis 20 an einem Beispiel beschrieben werden. Fig. 18 zeigt eine Szene in einer Umgebung des Fahrzeugs. Auf einer Fahrbahn 181 befindet sich ein Fahrzeug 182. Die Szene ist matrixförmig in eine Vielzahl von Bereichen unterteilt. In dem in Fig. 18 gezeigten Beispiel ist die Szene in 14 Zeilen und 19 Spalten unterteilt, sodass sich eine Gesamtzahl von 266 Bereichen ergibt. Diese geringe Anzahl von Zeilen und Spalten wurde aus Übersichtlichkeitsgründen in den Fig. 18 bis 20 gewählt. Praktische Implementierungen können beispielsweise mindestens 100 Zeilen und mindestens 200 Spalten, vorzugsweise 300 Zeilen und 700 Spalten aufweisen. Der Sensor 12 umfasst demzufolge vorzugsweise eine Sensormatrix mit einer entsprechenden Zeilen- und Spaltenauflösung. Die Beleuchtungseinrichtung 11 des Fahrzeugs 10 beleuchtet die in Fig. 18 dargestellte Szene vorzugsweise mit einer Leuchtdiodenlichtquelle und eine Auswertung erfolgt mit einem der zuvor beschriebenen Modulationsverfahren, beispielsweise dem frequenzmodulierten Dauerstrichverfahren, dem zufälligen Frequenzmodulationsverfahren, dem Einfrequenzmodulationsverfahren oder dem Pulsmodulationsverfahren. Durch Zusammenschalten der Empfängermatrix in Zeilen oder Spalten werden entfernungsaufgelöste Echogramme für die Zeilen und Spalten erzeugt.

Fig. 19 zeigt entsprechende entfernungsaufgelöste Echogramme für die 14 Zeilen der Szene der Fig. 18. Das Echogramm für die fünfte Zeile von unten der Szene der Fig. 18 soll nachfolgend beispielhaft im Detail beschrieben werden. Das Echogramm für diese fünfte Zeile ist in Fig. 19 mit dem Bezugszeichen 191 gekennzeichnet. Wie aus Fig. 19 ersichtlich ist, weist das Echogramm einen erhöhten Signalpegel im Bereich von 60 bis 110 Metern auf. Umgekehrt ist im Bereich von 10 bis 60 Metern und im Bereich von 110 bis 150 Meter im Wesentlichen kein Signalpegel vorhanden. Dies bedeutet, dass sich in der fünften Spalte mindestens ein Objekt im Bereich von 60 bis 110 m befindet. Es können jedoch mehrere Objekte in diesem Bereich vorhanden sein. Wo sich das Objekt in der horizontalen Richtung befindet, also in welchem Spaltenbereich sich das Objekt befindet, ist aus dem Echogramm der Fig. 19 nicht ersichtlich.

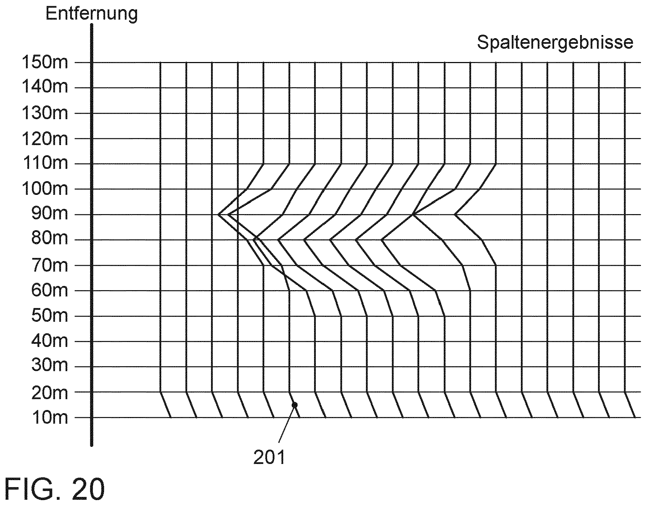

Fig. 20 zeigt entsprechende Echogramme für die 19 Spalten der Szenen der Fig. 18. Beispielhaft sei in diesem Zusammenhang auf die Spalte 6 von links der Fig. 18 verwiesen, welche in der Fig. 20 mit dem Bezugszeichen 201 gekennzeichnet ist. Das Echogramm 201 der sechsten Spalte zeigt an, dass sich im Bereich von 60 bis 110 Metern Entfernung ein Objekt oder mehrere Objekte befinden. Das Echogramm der Spalten enthält wiederum keine Informationen über die Verteilung der Objekte innerhalb der Spalte.

Aus der Gesamtheit der Echogramme kann für jeden der 266 einzelnen Bereiche der Szene der Fig. 18 eine entsprechende Entfernungsinformation zu Objekten in der Szene bestimmt werden. Eine bereichsspezifische Information kann beispielsweise mit Hilfe einer zweidimensionalen Fourier-Transformation aus den entfernungsaufgelösten Echogrammen der Zeilen und Spalten gewonnen werden.

Die entfernungsaufgelösten Echogramme in den Fig. 19 und 20 sind dimensionslos und können beispielsweise eine relative Größe anzeigen, welche anzeigt, wie viel Prozent des zeilen- bzw. spaltenförmigen Flächenbereichs eine jeweilige Entfernung zu dem Fahrzeug aufweist.

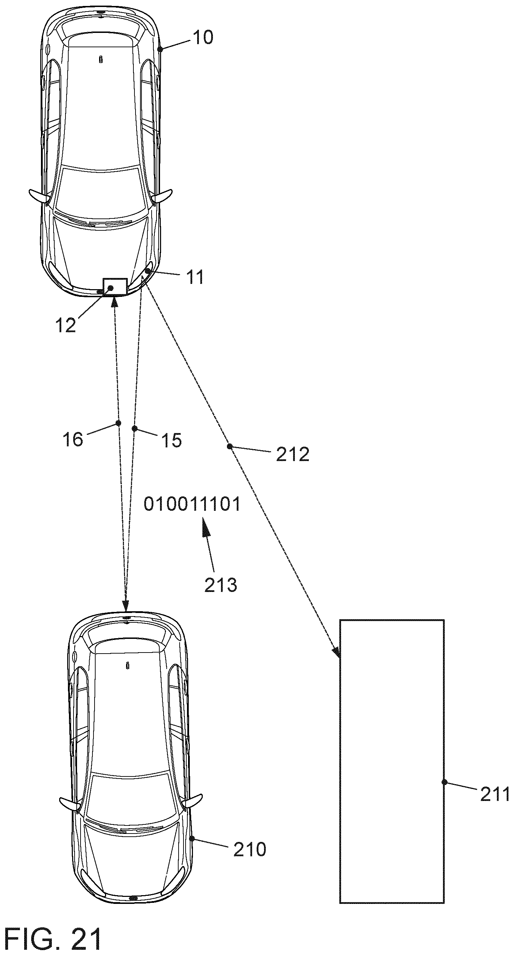

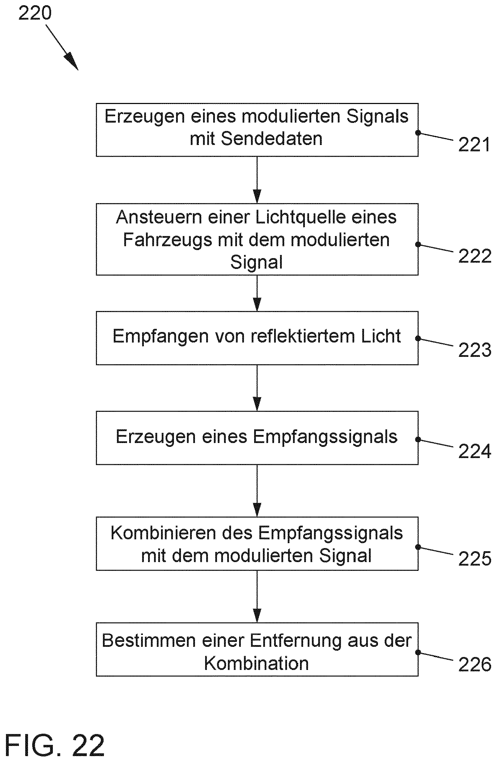

Sowohl bei der Pulsmodulation als auch bei dem zufälligen Frequenzmodulationsverfahren (RFM) ist es möglich, in das ausgesendete Signal 15 eine Information einzukodieren, die von einem Empfänger dekodiert werden kann. Diese Information kann beispielsweise für eine Kommunikation zwischen Fahrzeugen, eine sogenannte Car-to-Car Kommunikation oder für eine Kommunikation zwischen dem Fahrzeug 10 und einem Infrastrukturobjekt, beispielsweise einer Ampel oder einem Verkehrsleitsystem, verwendet werden. Fig. 22 zeigt ein Verfahren 220, mit welchem digitale Informationen gleichzeitig mit einer Entfernungsmessung übertragen werden können. Fig. 21 zeigt das Fahrzeug 10 sowie ein weiteres Fahrzeug 210 und ein Infrastrukturobjekt 211. Mit dem in Fig. 22 beschriebenen Verfahren 220 kann gleichzeitig eine Entfernung zwischen den Fahrzeugen 10 und 210 gemessen werden und eine Information, insbesondere eine digitale Information, an das Fahrzeug 210 oder das Infrastrukturobjekt 211 übertragen werden.

Im Schritt 221 wird ein moduliertes Signal in Abhängigkeit von Sendedaten, welche von dem Fahrzeug 10 zu senden sind, erzeugt. Im Schritt 222 wird die Lichtquelle 11 des Fahrzeugs 10 mit dem modulierten Signal angesteuert. Im Schritt 223 wird Licht 16, welches als Licht 15 von der Lichtquelle 11 abgegeben wurde und von dem Fahrzeug 210 oder einem anderen Objekt in der Umgebung des Fahrzeugs 10 reflektiert wurde, empfangen. Im Schritt 224 wird ein Empfangssignal in Abhängigkeit von dem empfangen Licht erzeugt. Das Empfangssignal kann beispielsweise ein analoges elektrisches Signal oder ein digitales Signal umfassen. Im Schritt 225 wird das Empfangssignal mit dem modulierten Signal kombiniert, beispielsweise mit Hilfe des zuvor beschriebenen Korrelationsverfahrens, und im Schritt 226 wird aus einem Kombinationssignal dieser Kombination die Entfernung zwischen dem Fahrzeug 10 und dem Fahrzeug 210 bestimmt. Das Modulationsverfahren zum Erzeugen des modulierten Signals kann insbesondere ein zufälliges Frequenzmodulationsverfahren oder ein Pulsmodulationsverfahren umfassen. Bei dem Frequenzmodulationsverfahren wird eine Modulationsfrequenz in Abhängigkeit von den Sendedaten geändert. Bei dem Pulsmodulationsverfahren wird ein Pulsabstand oder eine Pulslänge in Abhängigkeit von den Sendedaten geändert. Das modulierte Signal kann zusätzlich in Abhängigkeit von zufälligen Daten erzeugt werden.

Die Daten, welche von dem Fahrzeug 10 zu senden sind, werden somit in der Modulation des Sendesignals übertragen. Beispielsweise kann, wie in Fig. 21 gezeigt ist, eine Bitfolge 213 mit Hilfe des modulierten Sendesignals von dem Fahrzeug 10 sowohl an das vorausfahrende Fahrzeug 210 als auch an das Infrastrukturobjekt 211 übertragen werden, wie es durch die Lichtausbreitungspfeile 15 und 212 gezeigt wird. Empfänger in dem Fahrzeug 210 bzw. in dem Infrastrukturobjekt 211 können das modulierte Sendesignal empfangen, demodulieren und so die Sendedaten 213 zurückgewinnen und weiterverarbeiten. Das Einkodieren der Sendedaten 213 in das modulierte Sendesignal wird nachfolgend im Detail beispielhaft für ein Pulsmodulationsverfahren und ein zufälliges Frequenzmodulationsverfahren (RFM) beschrieben werden.

Bei dem Pulsmodulationsverfahren werden Lichtimpulse mit einer Pulswiederholungsrate gesendet. Diese ist typischerweise lang verglichen mit der Pulslänge der Lichtimpulse. Da es für die Entfernungsmessung ungünstig sein kann, wenn die Pulswiederholungsrate konstant ist, kann der Abstand zwischen den Pulsen in einem gewissen Bereich variiert werden, um beispielsweise Schwebungszustände zu vermeiden. Um Daten zu übertragen kann beispielsweise diese Variation des Abstands zwischen den Pulsen in einen statischen Anteil und in einen systematischen Anteil unterteilt werden. Beispielsweise können Pulse mit einer Länge von 50 nsec und einer Pulswiederholungsrate von 25 kHz, d.h. 40 $\mu$sec, verwenden. Um eine Entfernung im Bereich von beispielsweise bis zu 250 m zu messen, sollte ein Pulsabstand von 250 m x 6,6 nsec/m x 2 = 3,3 $\mu$sec nicht unterschritten werden. Somit ist es möglich, den Pulsabstand zwischen 3,3 $\mu$sec und 76 $\mu$sec zu variieren. Bei einem System mit einer Laufzeitentfernungsmessung und einem Basistiming von 25 snec ergeben sich 2.936 Variationsmöglichkeiten. Davon können beispielsweise 512 benutzt werden, um 9 Bits zu übertragen. Davon können beispielsweise 6 Bits die zu übersendenden Sendedaten umfassen und die übrigen 3 Bits können statistisch variiert werden. Somit schwankt der Abstand zwischen den Pulsen um 12,8 $\mu$sec von 33,6 bis 46,6 $\mu$sec. Somit können alle 40 $\mu$sec 6 Bits Sendedaten übertragen werden, wodurch eine Nettodatenrate von 150 Kbit/sec erreicht wird.

Bei der zufälligen Frequenzmodulation (RFM) können beispielsweise Frequenzen von 10 MHz bis 100 MHz innerhalb von 40 $\mu$sec variiert werden. Bei einem zufälligen Frequenzmodulationsverfahren ohne Datenübertragung werden aus diesem Frequenzband zufällig statisch mehrere Frequenzen ausgewählt, welche dann nacheinander moduliert werden und so einen Frequenzzug ergeben, welcher signifikant für die Messung ist. Für die Übertragung der Sendedaten wird die Frequenzauswahl nicht mehr zufällig durchgeführt, **sondern** umfasst zumindest einen systematischen Anteil. Beispielsweise können aus dem Band von 10 bis 100 MHz Frequenzen in Frequenzschritten von 10 kHz synthetisiert werden. Somit sind 9.000 unterschiedliche Frequenzen möglich. Davon können beispielsweise wiederum 512 als signifikante Frequenzen benutzt werden, sodass sich ein Frequenzabstand von ca. 175 kHz für jede Information ergibt. Ein typischer Frequenzmodulationsempfänger kann problemlos Frequenzen von 50 kHz unterscheiden, sodass die übertragenen Informationen leicht dekodiert werden können, wenn ein Frequenzabstand von 50 kHz oder mehr eingehalten werden wird. Für die zufällige Variation zur Reduzierung von Störeinflüssen verbleiben noch 125 kHz bzw. $\pm$ 62,5 kHz.

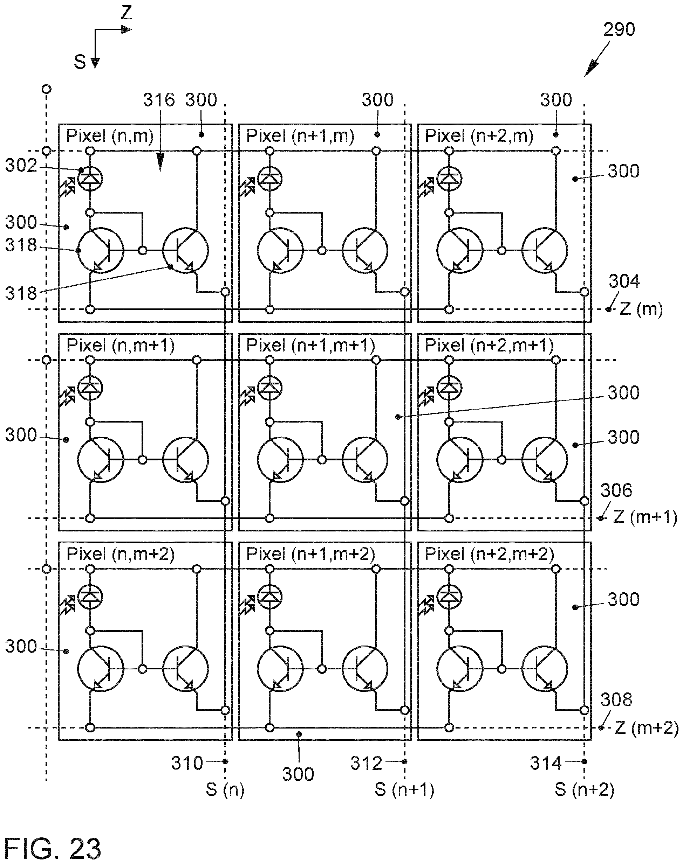

In Figur 23 ist ein schematischer Ausschnitt einer beispielhaften erfindungsgemäßen Sensoranordnung gezeigt, die ein erfindungsgemäßes Verfahren gemäß einem Ausführungsbeispiel ausführt. Man erkennt einen Sensor 290, der eine Mehrzahl einzelner Sensorelemente 300 umfasst , die jeweils Messsignale in Form eines Intensitätswert aus empfangenen Licht liefern.

Die Sensorelemente 300 sind matrixförmig angeordnet. Es existiert folglich eine per Koordinatensystem angedeutete Zeilen- und Spaltenrichtung, wobei die Zeilen in Fig. 23 mit Z und mit Spalten S bezeichnet sind. Es ist beispielhaft ein Ausschnitt von drei Zeilen und drei Spalten gezeigt, wobei auch eine jeweils deutlich höhere Anzahl vorgesehen sein kann (siehe vorstehende Beispiele). Eine Position der Pixel bzw. Sensorelemente 300 kann über Zeilen- und Spaltenkoordinaten angegeben sein, wie in Fig. 23 beispielhaft gezeigt.

Eine jede Zeile Z und eine jede Spalte S bildet einen streifenförmigen Bereich der hierin geschilderten Art, sodass Entfernungshistogramme entsprechend zeilen- und spaltenweise gebildet werden. Weiter liefert jedes Sensorelement 300 ein Messsignal, dass sowohl in Zeilenals auch Spaltenrichtung in der nachstehend geschilderten Weise ausgelesen werden kann, insbesondere um die zeilen- und spaltenweise gebildeten Entfernungshistogramme bilden zu können.

Die Sensorelemente 300 sind gleichartig aufgebaut. Die nachstehend erläuterten Komponenten der Sensorelemente 300 sind aber nicht für jedes Sensorelement 300 mit einem gesonderten Bezugszeichen versehen.

Jedes Sensorelement 300 umfasst einen Fotodetektorelement 302 in Form einer SiPM 302. Die SiPM 302 erzeugt nach Maßgabe eines empfangenen Lichts bzw. einer empfangenen Lichtintensität ein elektrisches Messsignal. Das Messsignal soll je Sensorelement 300 sowohl zeilen- als auch spaltenweise berücksichtigt werden (d. h. jeweils zu den zeilen- und spaltenweise gebildeten Entfernungshistogrammen beitragen). Hierfür ist jede SiPM 302 an eine Zeilenleitung 304 - 308 und an eine Spaltenleitung 310 - 314 angeschlossen.

Die an den Zeilenleitungen 304 - 308 und an den Spaltenleitungen 310 - 314 zeitgleich anliegenden Signale können zur zeilen- und spaltenweise Bildung der Entfernungshistogramme verwendet werden.

Die Verbindung zu den Zeilenleitungen 304 - 308 und an den Spaltenleitungen 310 - 314 wird über einen Stromspiegel 316 geschaffen, der neben gezeigten Beispiel durch eine übliche Schaltung von zwei Halbleitertransistoren 318 gebildet wird. Über einen der Halbleitertransistoren 318 werden jeweils die Spaltenleitungen 310 - 314 und über den anderen jeweils die Zeilenleitungen 304 - 308 versorgt.

Dieser Aufbau stellt eine einfache und zuverlässige Variante dar, um das gewünschte zeitgleiche Bestimmen von empfangenen Licht für Sensorelemente 300 in den streifenförmigen Bereichen oder, genauer gesagt, in den einzelnen Zeilen Z und Spalten S zu ermöglichen.

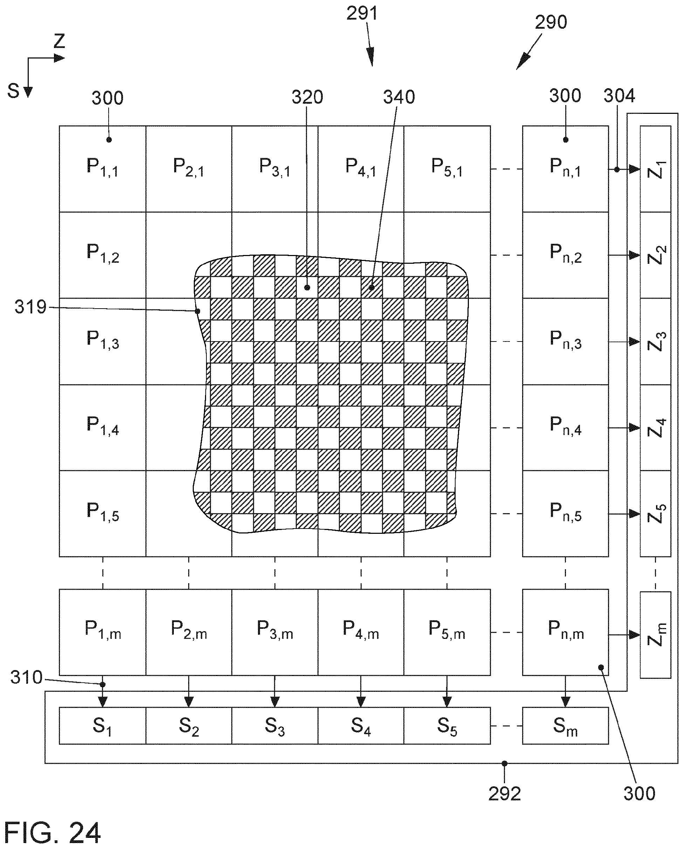

In Figur 24 ist ein schematischer Ausschnitt einer erfindungsgemäßen Sensoranordnung 290 gemäß einem weiteren Ausführungsbeispiel gezeigt. Es sind wiederum matrixförmig angeordnete Sensorelemente 300 gezeigt (nicht sämtliche mit einem entsprechenden Bezugszeichen versehen), deren innerer Aufbau jedoch nur äußerst grob und nur in einem ausgewählten und schematisch umrissenen Teilbereich 319 angedeutet ist.

Es ist gezeigt, dass jedes Sensorelement 300 mehrere Fotodetektorelementen 320, 340 umfasst, die in zwei Gruppen zusammengefasst sind. Genauer gesagt ist eine erste hell dargestellte Gruppe von Fotodetektorelementen 320 und eine zweite dunkel dargestellte Gruppe von Fotodetektorelementen 340 dargestellt, wobei jede Gruppe zum Beispiel sechzehn einzelne Fotodetektorelemente 320, 340 umfassen kann. Die Fotodetektorelemente 320, 340 können in Form oben erläuterter SPADS ausgebildet sein, die sich zu einem oder mehreren SIPMs zusammensetzen oder hiervon umfasst sind.

Man erkennt, dass die Fotodetektorelemente 320, 340 der einzelnen Gruppen schachbrettartig angeordnet sind, sodass zwei in Spalten- und Zeilenrichtung aufeinanderfolgende Fotodetektorelemente 320, 340 einer Gruppe jeweils ein Fotodetektorelement 320, 340 der anderen Gruppe zwischen sich einschließen. Die Fotodetektorelemente 320, 340 der einzelnen Gruppen sind somit in Spalten- und Zeilenrichtung alternierend angeordnet.

Die Fotodetektorelemente 320 der einen Gruppe liefern ein Messsignal, das an einer Zeilenleitung anliegt (siehe beispielhaft markierte Zeilenleitung 304). Die Fotodetektorelemente 340 der anderen Gruppe liefern ein Messsignal, dass an einer Spaltenleitung anliegt (siehe beispielhaft markierte Zeilenleitung 310).

Hierdurch wird gewährleistet, dass ohne zusätzliche Hardwarekomponenten in Form des Stromspiegels oder anderweitiger Verstärkungsschaltungen (die optional aber ebenso vorgesehen sein können), Messsignal eines Sensorelements 300 sowohl zeilen- als auch spaltenweise und insbesondere gleichzeitig ausgelesen werden können.

Aus Figur 24 verdeutlicht sich auch noch einmal, dass für jede Zeile Z (beispielhaft dargestellt als $Z_1$ des $Z_m$) und jede Spalte S (beispielhaft dargestellt als $S_1$ des $S_m$) Messungen erfolgen und insbesondere die geschilderten spalten- und zeilenweisen Entfernungshistogramme gebildet werden.

Schließlich ist in Figur 24 auch angedeutet, dass sie Sensoranordnung 290 in einen Sensor 291 unterteilt werden kann, der die Sensorelemente 300 und somit die die messsignalliefernden Einheiten umfasst. Die spalten- und zeilenweisen Entfernungshistogramme können hingegen durch eine beispielhaft angedeutete Verarbeitungseinheit 292 ermittelt werden, deren Funktion im Zusammenhang mit den weiteren vorstehenden Figuren bereits erläutert wurde und die allgemein gleichartig zu diesen Figuren ausgebildet sein kann.

Der Vollständigkeit halber sei erwähnt, dass es sich bei den äußersten Sensorelementen 300 der Zeilen $P_{1,1}$ bis $P_{n,1}$ und $P_{1,m}$ bis $P_{n,m}$ sowie der Spalten $P_{n,1}$ bis $P_{n,m}$ und $P_{1,1}$ bis $P_{1,m}$ (und optional auch weitere hieran angrenzende Zeilen und Spalten) um Randbereiche handelt, in den statt einer zeitgleichen auch eine sequenzielle Erfassung bzw. Auslösung der entsprechend Sensorelemente 300 erfolgen könnte. Dem liegt der Gedanke zugrunde, dass in diesen Bereichen vermutlich weniger häufig relevante Objekte erfassbar sein werden, als zum Beispiel in einem zentralen Bereich der matrixförmigen Sensorelement-Anordnung.

Bezugszeichenliste

| | |
|---|---|
| 10 | Fahrzeug |
| 11 | Lichtquelle |
| 12 | Optischer Sensor |
| 13 | Verarbeitungseinheit |
| 14 | Fahrerassistenzsystem |
| 15 | Licht |
| 16 | Reflektiertes Licht |
| 17 | Objekt |
| 18 | Entfernung |
| 20 | Verfahren |
| 21-25 | Schritt |
| 30 | Verfahren |
| 31-35 | Schritt |
| 40 | Leuchtdiodenlichtquelle |
| 41 | Leuchtdiode |
| 42 | Schaltelement |
| 43 | Energiespeicherelement |
| 44 | Moduliertes Signal |
| 45 | Masseanschluss |
| 46 | Stromversorgungsanschluss |
| 47 | Erster Anschluss |
| 48 | Zweiter Anschluss |
| 50-52 | Verbindungen |
| 54 | Gehäuse |
| 60 | Verfahren |
| 61-67 | Schritt |
| 71, 72 | Erfassungsbereich |
| 81-84 | Erfassungsbereich |
| 121-127 | Beleuchtungsbereich |
| 131-136 | Erfassungsbereich |
| 151 | Leuchtband |
| 170 | Verfahren |
| 171-174 | Schritt |
| 181 | Fahrbahn |
| 182 | Fahrzeug |
| 191 | Echogramm |
| 201 | Echogramm |
| 210 | Fahrzeug |
| 211 | Infrastrukturobjekt |
| 212 | Lichtausbereitungspfeil |
| 213 | Sendedaten |
| 220 | Verfahren |
| 221-226 | Schritt |
| 291 | Sensor |
| 292 | Verarbeitungseinheit |
| 300 | Sensorelement |
| S | Spalten |
| Z | Zeilen |
| 302 | SiPM |
| 320, 340 | Fotodetektorelement |
| 304-308 | Zeilenleitung |
| 310-314 | Spaltenleitung |
| 316 | Stromspiegel |
| 318 | Halbleitertransistoren |
| 319 | Teilbereich |

**EP 3 928 253 B1**

**Patentansprüche**

1. Sensoranordnung (290) für ein Fahrzeug (10) zum Erfassen von Entfernungsinformationen, mit:

   - einem Sensor (291), der dazu eingerichtet ist, Licht (16) zu empfangen, das von einer Szene in der Umgebung reflektiert wird;
   - einer Verarbeitungseinheit (292), die dazu eingerichtet ist, mehrere erste Entfernungshistogramme (191) in Abhängigkeit von dem empfangenen Licht (16) zu bestimmen, wobei einem jeweiligen ersten Entfernungshistogramm (191) der mehreren ersten Entfernungshistogramme (191) ein jeweiliger erster streifenförmiger Bereich der Szene zugeordnet ist, wobei das erste Entfernungshistogramm (191) eine Stärke von Reflexionen in einem Entfernungsbereich durch Objekte in dem zugeordneten ersten streifenförmigen Bereich umfasst;

   und die ferner dazu eingerichtet ist, mehrere zweite Entfernungshistogramme (201) in Abhängigkeit von dem empfangenen Licht (16) zu bestimmen, wobei einem jeweiligen zweiten Entfernungshistogramm (201) der mehreren zweiten Entfernungshistogramme (201) ein jeweiliger zweiter streifenförmiger Bereich der Szene zugeordnet ist, wobei das zweite Entfernungshistogramm (201) eine Stärke von Reflexionen in einem Entfernungsbereich durch Objekte in dem zugeordneten zweiten streifenförmigen Bereich umfasst; wobei die Entfernungshistogramme entfernungsaufgelöste Echogramme sind;
   und die ferner dazu eingerichtet ist, eine Entfernungsinformation für einen Bereich der Szene in Abhängigkeit von den mehreren ersten Entfernungshistogrammen (191) und den mehreren zweiten Entfernungshistogrammen (201) zu bestimmen, wobei der Bereich der Szene einen Kreuzungsbereich eines der ersten streifenförmigen Bereiche mit einem der zweiten streifenförmigen Bereiche umfasst;

   wobei die streifenförmigen Bereiche der Szene jeweils mit streifenförmigen Bereichen des Sensors (291) korrespondieren,
   wobei die Sensoranordnung (290) dazu eingerichtet ist, für eine Mehrzahl der korrespondierenden streifenförmigen Bereiche das darin empfangene Licht zeitgleich zu bestimmen,
   wobei der Sensor (291) eine Sensormatrix mit in Zeilen (Z) und Spalten (S) angeordneten Sensorelementen (300) umfasst, die jeweils für ein Empfangen von Licht (16) eingerichtet sind, wobei die Zeilen (Z) mit den ersten streifenförmigen Bereichen der Szene korrespondieren und die Spalten (S) mit den zweiten streifenförmigen Bereichen der Szene korrespondieren, und wobei ferner wenigstens eine der folgenden Varianten vorgesehen ist:

   I) zumindest diejenigen Sensorelemente (300), deren empfangenes Licht (16) zeitgleich bestimmt wird, umfassen jeweils eine Stromspiegelanordnung (316), die mit einer Zeilenleitung (304-308) und mit einer Spaltenleitung (310-314) verbunden ist, an denen auch weitere Stromspiegelanordnungen (316) anderer Sensorelemente (300) angeschlossen sind;
   II) zumindest diejenigen Sensorelemente (300), deren empfangenes Licht (16) zeitgleich bestimmt wird, umfassen jeweils wenigstens zwei Fotodetektorelemente (320, 340), die jeweils Licht (16) empfangen, und eines der Fotodetektorelemente (320, 340) ist mit einer Zeilenleitung (304-308) und das andere mit einer Spaltenleitung (310-314) verbunden.

2. Sensoranordnung (290) nach Anspruch 1,
   wobei der Sensor (291) dazu eingerichtet ist, für wenigstens 50 % der korrespondierenden streifenförmigen Bereiche das darin empfangene Licht (16) zeitgleich zu bestimmen.

3. Sensoranordnung (290) nach Anspruch 1 oder 2,
   wobei die korrespondierenden streifenförmigen Bereiche des Sensors (291) in Bereiche unterteilt sind, in denen das darin empfangene Licht (16) zeitgleich bestimmt wird, und in Bereiche, in denen das darin empfangene Licht (16) nicht zeitgleich bestimmt wird.

4. Sensoranordnung (290) nach Anspruch 3,
   wobei die Bereiche ohne zeitgleiche Bestimmung des empfangenen Lichts (16) zumindest teilweise in einem Randbereich des Sensors (291) liegen.

5. Sensoranordnung (290) nach einem der vorangehenden Ansprüche,
   wobei die Sensorelemente (300) in den Zeilen (Z) und Spalten (S) jeweils zusammengeschaltet sind und die Entfernungshistogramme aus einem Gesamtsignal von entsprechend zusammengeschalteten Sensorelementen (300) bestimmt werden.

6. Sensoranordnung (290) nach Alternative II) von Anspruch 1, wobei mehr als zwei Fotodetektorelemente (320, 340) vorgesehen und diese zu zwei Gruppen zusammengefasst sind, wobei die Fotodetektorelemente (320, 340) der einen Gruppe mit einer Zeilenleitung (304-308) und die Fotodetektorelemente (320, 340) der einen Gruppe mit einer Spaltenleitung (310-314) verbunden sind, wobei und wenigstens zwei Fotodetektorelemente (320, 340) der einen Gruppe wenigstens ein Fotodetektorelement (320, 340) der andere Gruppe zwischen sich einschließen.

7. Verfahren für ein Fahrzeug (10) zum Erfassen von Entfernungsinformationen, mit:

- Ansteuern einer Lichtquelle 11;
- Empfangen von Licht (16) mit einem Sensor (291), das von einer Szene in der Umgebung reflektiert wird;
- Bestimmen von mehreren ersten Entfernungshistogrammen (191) in Abhängigkeit von dem empfangenen Licht (16), wobei einem jeweiligen ersten Entfernungshistogramm (191) der mehreren ersten Entfernungshistogramme (191) ein jeweiliger erster streifenförmiger Bereich der Szene zugeordnet ist, wobei das erste Entfernungshistogramm (191) eine Stärke von Reflexionen in einem Entfernungsbereich durch Objekte in dem zugeordneten ersten streifenförmigen Bereich umfasst;
- Bestimmen von mehreren zweiten Entfernungshistogrammen (201) in Abhängigkeit von dem empfangenen Licht (16), wobei einem jeweiligen zweiten Entfernungshistogramm (201) der mehreren zweiten Entfernungshistogramme (201) ein jeweiliger zweiter streifenförmiger Bereich der Szene zugeordnet ist, wobei das zweite Entfernungshistogramm (201) eine Stärke von Reflexionen in einem Entfernungsbereich durch Objekte in dem zugeordneten zweiten streifenförmigen Bereich umfasst; wobei die Entfernungshistogramme entfernungsaufgelöste Echogramme sind;
- Bestimmen von einer Entfernungsinformation für einen Bereiche der Szene in Abhängigkeit von den mehreren ersten Entfernungshistogrammen (191) und den mehreren zweiten Entfernungshistogrammen (201), wobei der Bereich der Szene einen Kreuzungsbereich eines der ersten streifenförmigen Bereiche mit einem der zweiten streifenförmigen Bereiche umfasst; wobei die streifenförmigen Bereiche der Szene jeweils mit streifenförmigen Bereichen des Sensors (291) korrespondieren, wobei für eine Mehrzahl der korrespondierenden streifenförmigen Bereiche das darin empfangene Licht (16) zeitgleich bestimmt wird, wobei der Sensor (291) eine Sensormatrix mit in Zeilen (Z) und Spalten (S) angeordneten Sensorelementen (300) umfasst, die jeweils für ein Empfangen von Licht (16) eingerichtet sind, wobei die Zeilen (Z) mit den ersten streifenförmigen Bereichen der Szene korrespondieren und die Spalten (S) mit den zweiten streifenförmigen Bereichen der Szene korrespondieren, und wobei ferner wenigstens eine der folgenden Varianten vorgesehen ist:

- zumindest diejenigen Sensorelemente (300), deren empfangenes Licht (16) zeitgleich bestimmt wird, umfassen jeweils eine Stromspiegelanordnung (316), die mit einer Zeilenleitung (304-308) und mit einer Spaltenleitung (310-314) verbunden ist, an denen auch weitere Stromspiegelanordnungen (316) anderer Sensorelemente (300) angeschlossen sind;
- zumindest diejenigen Sensorelemente (300), deren empfangenes Licht (16) zeitgleich bestimmt wird, umfassen jeweils wenigstens zwei Fotodetektorelemente (320, 340), die jeweils Licht (16) empfangen, und eines der Fotodetektorelemente (320, 340) ist mit einer Zeilenleitung (304-308) und das andere mit einer Spaltenleitung (310-314) verbunden.

8. Vorrichtung zur Erfassung einer Entfernungsinformation für ein Fahrzeug, umfassend:

eine Lichtquelle, die zum Beleuchten einer Szene in einer Umgebung oder innerhalb des Fahrzeugs ausgestaltet ist,
eine Sensoranordnung nach einem der Ansprüche 1 bis 6 zum Empfangen von Licht, welches von der Lichtquelle stammt und von der Szene reflektiert wurde, und
eine Verarbeitungseinheit, die dazu eingerichtet ist, die Lichtquelle anzusteuern und in Abhängigkeit von dem empfangenen Licht mehrere erste Entfernungshistogramme und mehrere zweite Entfernungshistogramme gemäß einem der Ansprüche 1 bis 6 zu bestimmen.

**Claims**

1. Sensor arrangement (290) for a vehicle (10) for acquiring distance information, comprising:

   - a sensor (291) which is configured to receive light (16) reflected from a scene in the surrounding region;
   - a processing unit (292) which is configured to determine a plurality of first distance histograms (191) depending on the received light (16), wherein a particular first distance histogram (191) of the plurality of first distance histograms (191) is assigned a particular first strip-shaped region of the scene, wherein the first distance histogram (191) comprises a strength of reflections in a distance range by objects in the assigned first strip-shaped region;

   and which is further configured to determine a plurality of second distance histograms (201) depending on the received light (16), wherein a particular second distance histogram (201) of the plurality of second distance histograms (201) is assigned a particular second strip-shaped region of the scene, wherein the second distance histogram (201) comprises a strength of reflections in a distance range by objects in the assigned second strip-shaped region; wherein the distance histograms are distance-resolved echograms;
   and which is further configured to determine distance information for a region of the scene depending on the plurality of first distance histograms (191) and the plurality of second distance histograms (201), wherein the region of the scene comprises an intersection region of one of the first strip-shaped regions with one of the second strip-shaped regions;
   wherein the strip-shaped regions of the scene each correspond to strip-shaped regions of the sensor (291), wherein the sensor arrangement (290) is configured to simultaneously determine the light received in a plurality of the corresponding strip-shaped regions,
   wherein the sensor (291) comprises a sensor matrix with sensor elements (300) arranged in rows (Z) and columns (S), each of which is configured to receive light (16), wherein the rows (Z) correspond to the first strip-shaped regions of the scene and the columns (S) correspond to the second strip-shaped regions of the scene, and wherein at least one of the following variants is further provided:

   I) at least those sensor elements (300) of which the received light (16) is determined simultaneously each comprise a current mirror arrangement (316) which is connected to a row line (304-308) and to a column line (310-314), to which further current mirror arrangements (316) of other sensor elements (300) are also connected;
   II) at least those sensor elements (300) of which the received light (16) is determined simultaneously each comprise at least two photodetector elements (320, 340) each receiving light (16), and one of the photodetector elements (320, 340) is connected to a row line (304-308) and the other to a column line (310-314).

2. Sensor arrangement (290) according to claim 1,
   wherein the sensor (291) is configured to simultaneously determine the light (16) received in at least 50% of the corresponding strip-shaped regions.

3. Sensor arrangement (290) according to claim 1 or 2,
   wherein the corresponding strip-shaped regions of the sensor (291) are divided into regions in which the light (16) received therein is determined simultaneously, and into regions in which the light (16) received therein is not determined simultaneously.

4. Sensor arrangement (290) according to claim 3,
   wherein the regions without simultaneous determination of the received light (16) lie at least partially in an edge region of the sensor (291).

5. Sensor arrangement (290) according to any of the preceding claims,
   wherein the sensor elements (300) in the rows (Z) and columns (S) are each interconnected and the distance histograms are determined from a total signal of correspondingly interconnected sensor elements (300).

6. Sensor arrangement (290) according to alternative II) of claim 1,
   wherein more than two photodetector elements (320, 340) are provided and these are combined into two groups, wherein the photodetector elements (320, 340) of one group are connected to a row line (304-308) and the photodetector elements (320, 340) of one group are connected to a column line (310-314), and wherein at least two photodetector elements (320, 340) of one group enclose at least one photodetector element (320, 340) of the other group between them.

7. Method for a vehicle (10) for acquiring distance information, comprising:

- controlling a light source 11;
- receiving, with a sensor (291), light (16) reflected from a scene in the surrounding region;
- determining a plurality of first distance histograms (191) depending on the received light (16), wherein a particular first distance histogram (191) of the plurality of first distance histograms (191) is assigned a particular first strip-shaped region of the scene, wherein the first distance histogram (191) comprises a strength of reflections in a distance range by objects in the assigned first strip-shaped region;
- determining a plurality of second distance histograms (201) depending on the received light (16), wherein a particular second distance histogram (201) of the plurality of second distance histograms (201) is assigned a particular second strip-shaped region of the scene, wherein the second distance histogram (201) comprises a strength of reflections in a distance range by objects in the assigned second strip-shaped region; wherein the distance histograms are distance-resolved echograms;
- determining distance information for a region of the scene depending on the plurality of first distance histograms (191) and the plurality of second distance histograms (201), wherein the region of the scene comprises an intersection region of one of the first strip-shaped regions with one of the second strip-shaped regions;

wherein the strip-shaped regions of the scene each correspond to strip-shaped regions of the sensor (291), wherein for a plurality of the corresponding strip-shaped regions the light (16) received therein is determined simultaneously,
wherein the sensor (291) comprises a sensor matrix with sensor elements (300) arranged in rows (Z) and columns (S), each of which is configured to receive light (16), wherein the rows (Z) correspond to the first strip-shaped regions of the scene and the columns (S) correspond to the second strip-shaped regions of the scene, and wherein at least one of the following variants is further provided:

- at least those sensor elements (300) of which the received light (16) is determined simultaneously each comprise a current mirror arrangement (316) which is connected to a row line (304-308) and to a column line (310-314), to which further current mirror arrangements (316) of other sensor elements (300) are also connected;
- at least those sensor elements (300) of which the received light (16) is determined simultaneously each comprise at least two photodetector elements (320, 340) each receiving light (16), and one of the photodetector elements (320, 340) is connected to a row line (304-308) and the other to a column line (310-314).

8. Device for acquiring distance information for a vehicle, comprising: a light source configured to illuminate a scene in a surrounding region or within the vehicle,
a sensor arrangement according to any of claims 1 to 6 for receiving light which originates from the light source and has been reflected from the scene, and a processing unit configured to control the light source and to determine a plurality of first distance histograms and a plurality of second distance histograms according to any of claims 1 to 6 depending on the received light.

**Revendications**

1. Système à capteur (290) pour un véhicule (10) permettant de détecter des informations de distance, comportant :

- un capteur (291) configuré pour recevoir de la lumière (16) réfléchie par une scène dans l'environnement ;
- une unité de traitement (292) configurée pour déterminer plusieurs premiers histogrammes de distance (191) en fonction de la lumière (16) reçue, dans lequel un premier histogramme de distance (191) respectif des premiers histogrammes de distance (191) est associé à une première zone en forme de bande respective de la scène, dans lequel le premier histogramme de distance (191) comprend une intensité de réflexions par des objets dans une plage de distance dans la première zone en forme de bande associée ;

et est en outre configurée pour déterminer plusieurs seconds histogrammes de distance (201) en fonction de la lumière (16) reçue, dans lequel un second histogramme de distance (201) respectif des seconds histogrammes de distance (201) est associé à une seconde zone en forme de bande respective de la scène, dans lequel le second histogramme de distance (201) comprend une intensité de réflexions par des objets dans une zone de distance dans la seconde zone en forme de bande associée ; dans lequel les histogrammes de distance sont des échogrammes résolus à distance ;

et est en outre configurée pour déterminer des informations de distance pour une zone de la scène en fonction des premiers histogrammes de distance (191) et des seconds histogrammes de distance (201), dans lequel la zone de la scène comprend une zone d'intersection de l'une des premières zones en forme de bande et de l'une des secondes zones en forme de bande ;

dans lequel les zones en forme de bande de la scène correspondent respectivement à des zones en forme de bande du capteur (291),

dans lequel le système à capteur (290) est configuré pour déterminer simultanément, pour une pluralité des zones en forme de bande correspondantes, la lumière qui y est reçue,

dans lequel le capteur (291) comprend une matrice de capteur comportant des éléments de capteur (300) disposés en lignes (Z) et en colonnes (S), lesquels sont respectivement configurés pour recevoir de la lumière (16), dans lequel les lignes (Z) correspondent aux premières zones en forme de bande de la scène et les colonnes (S) correspondent aux secondes zones en forme de bande de la scène, et dans lequel, en outre, au moins l'une des variantes suivantes est prévue :

I) au moins lesdits éléments de capteur (300) dont la lumière (16) reçue est déterminée simultanément comprennent respectivement un système formant miroir de courant (316) qui est connecté à un câble de ligne (304-308) et à un câble de colonne (310-314), auxquels sont également connectés d'autres systèmes formant miroirs de courant (316) d'autres éléments de capteur (300) ;

II) au moins lesdits éléments de capteur (300) dont la lumière (16) reçue est déterminée simultanément comprennent respectivement au moins deux éléments de photodétection (320, 340) recevant respectivement de la lumière (16), et l'un des éléments de photodétection (320, 340) est connecté à un câble de ligne (304-308) et l'autre à un câble de colonne (310-314).

2. Système à capteur (290) selon la revendication 1,
dans lequel le capteur (291) est configuré pour déterminer simultanément, pour au moins 50 % des zones en forme de bande correspondantes, la lumière (16) qui y est reçue.

3. Système à capteur (290) selon la revendication 1 ou 2,
dans lequel les zones en forme de bande correspondantes du capteur (291) sont divisées en zones dans lesquelles la lumière (16) qui y est reçue est déterminée simultanément et en zones dans lesquelles la lumière (16) qui y est reçue n'est pas déterminée simultanément.

4. Système à capteur (290) selon la revendication 3,
dans lequel les zones sans détermination simultanée de la lumière (16) reçue sont situées au moins partiellement dans une zone marginale du capteur (291).

5. Système à capteur (290) selon l'une des revendications précédentes,
dans lequel les éléments de capteur (300) sont respectivement interconnectés dans les lignes (Z) et les colonnes (S) et les histogrammes de distance sont déterminés à partir d'un signal total d'éléments de capteur (300) interconnectés de manière correspondante.

6. Système à capteur (290) selon la variante II) de la revendication 1,
dans lequel plus de deux éléments de photodétection (320, 340) sont prévus et ceux-ci sont réunis en deux groupes, dans lequel les éléments de photodétection (320, 340) d'un des groupes sont connectés à un câble de ligne (304-308) et les éléments de photodétection (320, 340) d'un des groupes sont connectés à un câble de colonne (310-314), et dans lequel au moins deux éléments de photodétection (320, 340) d'un des groupes enferme entre eux au moins un élément de photodétection (320, 340) de l'autre groupe.

7. Procédé pour un véhicule (10) permettant de détecter des informations de distance, comportant :

- la commande d'une source de lumière (11) ;
- la réception, avec un capteur (291), de lumière (16) réfléchie par une scène dans l'environnement ;
- la détermination de plusieurs premiers histogrammes de distance (191) en fonction de la lumière (16) reçue, dans lequel un premier histogramme de distance (191) respectif des premiers histogrammes de distance (191) est associé à une première zone en forme de bande respective de la scène, dans lequel le premier histogramme de distance (191) comprend une intensité de réflexions par des objets dans une plage de distance dans la première zone en forme de bande associée ;

- la détermination de plusieurs seconds histogrammes de distance (201) en fonction de la lumière (16) reçue, dans lequel un second histogramme de distance (201) respectif des seconds histogrammes de distance (201) est associé à une seconde zone en forme de bande respective de la scène, dans lequel le second histogramme de distance (201) comprend une intensité de réflexions par des objets dans une zone de distance dans la seconde zone en forme de bande associée ; dans lequel les histogrammes de distance sont des échogrammes résolus à distance ;

- la détermination d'informations de distance pour une zone de la scène en fonction des premiers histogrammes de distance (191) et des seconds histogrammes de distance (201), dans lequel la zone de la scène comprend une zone d'intersection de l'une des premières zones en forme de bande et de l'une des secondes zones en forme de bande ;

dans lequel les zones en forme de bande de la scène correspondent respectivement à des zones en forme de bande du capteur (291),

dans lequel, pour une pluralité des zones en forme de bande correspondantes, la lumière (16) qui y est reçue est déterminée simultanément,

dans lequel le capteur (291) comprend une matrice de capteur comportant des éléments de capteur (300) disposés en lignes (Z) et en colonnes (S), lesquels sont respectivement configurés pour recevoir de la lumière (16), dans lequel les lignes (Z) correspondent aux premières zones en forme de bande de la scène et les colonnes (S) correspondent aux secondes zones en forme de bande de la scène, et dans lequel, en outre, au moins l'une des variantes suivantes est prévue :

- au moins lesdits éléments de capteur (300) dont la lumière (16) reçue est déterminée simultanément comprennent respectivement un système formant miroir de courant (316) qui est connecté à un câble de ligne (304-308) et à un câble de colonne (310-314), auxquels sont également connectés d'autres systèmes formant miroirs de courant (316) d'autres éléments de capteur (300) ;
- au moins lesdits éléments de capteur (300) dont la lumière (16) reçue est déterminée simultanément comprennent respectivement au moins deux éléments de photodétection (320, 340) recevant respectivement de la lumière (16), et l'un des éléments de photodétection (320, 340) est connecté à un câble de ligne (304-308) et l'autre à un câble de colonne (310-314).

8. Dispositif permettant de détecter des informations de distance pour un véhicule, comprenant : une source de lumière configurée pour éclairer une scène dans un environnement ou à l'intérieur du véhicule, un système à capteur selon l'une des revendications 1 à 6 permettant de recevoir de la lumière provenant de la source de lumière et réfléchie par la scène, et une unité de traitement configurée pour commander la source de lumière et déterminer, en fonction de la lumière reçue, plusieurs premiers histogrammes de distance et plusieurs seconds histogrammes de distance selon l'une des revendications 1 à 6.

FIG. 1

20

| Ansteuern einer Lichtquelle eines Fahrzeugs mit einem modulierten Signal | 21 |
| Empfangen von reflektiertem Licht | 22 |
| Erzeugen eines Empfangssignals | 23 |
| Kombinieren des Empfangssignals mit dem modulierten Signal | 24 |
| Bestimmen einer Entfernung aus der Kombination | 25 |

FIG. 2

30

| Ansteuern einer Lichtquelle eines Fahrzeugs mit einem FMCW-Signal | 31 |

| Empfangen von reflektiertem Licht | 32 |

| Erzeugen eines Empfangssignals | 33 |

| Mischen des Empfangssignals und des FMCW- Signals | 34 |

| Bestimmen einer Geschwindigkeit aus dem Mischsignal | 35 |

## FIG. 3

40

Vcc — 46

moduliertes Signal — 44

42

43

47

48

41

45

GND —

## FIG. 4

FIG. 5

60

Bestimmen eines Betriebszustands
des Fahrzeugs — 61

↓

Erzeugen eines Sendesignals
abhängig von dem Betriebszustand — 62

↓

Ansteuern der
Beleuchtungseinrichtung mit dem
Sendesignal — 63

↓

Empfangen von reflektiertem Licht — 64

↓

Erzeugen eines Empfangssignals — 65

↓

Kombinieren des Empfangssignals
und des Sendesignals — 66

↓

Bestimmen einer Entfernung aus der
Kombination — 67

FIG. 6

FIG. 7

FIG. 8

FIG. 9

83  81

84  82

FIG. 10

FIG. 11

124

123

125

122

126

121

127

11

FIG. 12

133 134

132 135

131 136

12

FIG. 13

EP 3 928 253 B1

FIG. 14

FIG. 15

35

FIG. 16

FIG. 17

FIG. 18

FIG. 19

FIG. 20

010011101

FIG. 21

220

Erzeugen eines modulierten Signals
mit Sendedaten

221

Ansteuern einer Lichtquelle eines
Fahrzeugs mit dem modulierten
Signal

222

Empfangen von reflektiertem Licht

223

Erzeugen eines Empfangssignals

224

Kombinieren des Empfangssignals
mit dem modulierten Signal

225

Bestimmen einer Entfernung aus der
Kombination

226

FIG. 22

FIG. 23

FIG. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013002671 A1

- WO 20081547361 A1

**In der Beschreibung aufgeführte Nicht-Patentliteratur**

- **LARRY LI**. *Time-of-Flight Camera - An Introduction*, 31 May 2014, http://www.ti.com/lit/wp/sloa190b/sloa190b. pdf

- **ROLF KAUFMANN et al.** *A time-of-flight line sensor: development and application, PROCEEDINGS OF SPIE*, 01 September 2004, vol. 5459, ISSN ISSN 0277-786X